# FASCICULE DE BREVET EUROPEEN

(11) **EP 1 579 461 B1**
(45) Date de publication et mention de la délivrance du brevet: **07.06.2006**
(21) Numéro de dépôt: 02808299.8
(22) Date de dépôt: 24.12.2002
(51) Int. Cl.: G21C 21/02

(54) **METHODE ET DISPOSITIF DE FABRICATION DE CRAYONS DE COMBUSTIBLE MOX NON CONTAMINES**
VERFAHREN UND VORRICHTUNG ZUR HERSTELLUNG VON NICHT VERUNREINIGTEN MOX-BRENNSTÄBEN
METHOD AND DEVICE FOR MANUFACTURE OF NON-CONTAMINATED MOX FUEL RODS

(43) Date de publication de la demande: 28.09.2005
(73) Titulaire: Belgonucleaire SA, 1200 Bruxelles (BE)
(72) Inventeur: VANDERGHEYNST, Alain, B-7370 Dour (BE); HEYLEN, Jean, B-2400 Mol (BE); AERTS, Louis, B-2400 Mol (BE)
(74) Mandataire: Gevers, François
(86) Numéro de dépôt international: PCT/BE2002/000200
(87) Numéro de publication internationale: WO 2004/059657

(56) Documents cités:
- WO-A-98/26428
- FR-A- 2 214 941
- FR-A- 2 522 436
- US-A- 4 484 339

## Description

### Domaine de l'invention

La présente invention concerne une méthode de fabrication de crayons de combustible MOX non contaminés, au départ de pastilles, dans une enceinte de confinement en dépression, la méthode comportant les opérations suivantes pour un crayon :
- un chargement des pastilles en colonnes successives dans une gaine munie préalablement d'un premier bouchon à une de ses deux extrémités,
- un chargement de différents composants structuraux, notamment d'un ressort de maintien,
- un emmanchement d'un second bouchon à l'autre extrémité de la gaine,
- un soudage périphérique dudit second bouchon, et
- au moins un nettoyage et au moins un contrôle de la contamination des parties de ladite gaine ou respectivement du crayon ayant été exposées à une éventuelle contamination.

Le recyclage du plutonium, issu du retraitement des combustibles nucléaires à usage civil ou résultant des programmes de démantèlement des armes nucléaires, par la fabrication de combustible frais à oxyde mixte (Mixed OXide ou MOX en anglais) d'uranium/plutonium à destination des réacteurs nucléaires commerciaux, est en cours d'industrialisation et de mondialisation.

L'industrialisation passe entre autres par
- l'automatisation des opérations de fabrication,
- la limitation de l'exposition du personnel d'exploitation aux rayonnements ionisants et
- la réduction des effluents liquides et solides.

La mondialisation voit accéder à cette technologie de recyclage les grandes puissances, qu'elles soient politiques, économiques ou démographiques (US, Japon, Russie, Inde, Chine,..). L'Europe occidentale entretient une certaine avance dans le développement de procédés industriels dans ce domaine.

La recherche de compétitivité par les producteurs d'électricité, liée à la libéralisation de leur marché, pousse les concepteurs de combustible nucléaire à limiter la fréquence des rechargements des coeurs des réacteurs, en recherchant des taux d'épuisement du combustible sans cesse croissants lors du déchargement, tant pour le combustible UO₂ que pour le combustible MOX (par exemple, 50 GWd/t). Cela a pour conséquence de viser à produire des combustibles MOX à plus haute teneur fissile en plutonium, et avec des plutoniums civils de composition isotopique de plus en plus dégradée, c'est-à-dire avec des combustibles dont l'activité alpha ne cesse de s'accroître.

Pour la maîtrise de la sûreté des usines de fabrication de combustible MOX (prévention des risques d'ingestion/inhalation par les opérateurs), de la sûreté des transports et de la sûreté des réacteurs nucléaires de puissance (non contamination des circuits primaires), il importe que les crayons de combustible MOX chargés sous forme d'assemblages ne soient pas ou ne soient que très faiblement contaminés sur la surface externe de leur gaine, laquelle assure, avec ses bouchons soudés d'extrémité, le confinement des pastilles MOX.

La présente invention concerne des opérations de fabrication de crayons de combustible MOX, en particulier des opérations de chargement des pastilles fortement contaminées dans la gaine, et d'emmanchement et de soudage du second bouchon d'extrémité, et concerne des méthodes et dispositifs pour produire industriellement des crayons de combustible MOX non contaminés, sans qu'il soit nécessaire de recourir à des opérations de décontamination chimique ou électrolytique par voie humide, polluantes et à risques de criticité augmentés.

Pour rappel, un crayon de combustible nucléaire est généralement constitué d'une gaine métallique (le plus souvent en alliage de zirconium ou en acier inoxydable), de pastilles de combustible (le plus souvent en oxyde d'uranium ou d'uranium/plutonium), d'un ressort de maintien et de deux bouchons d'extrémité soudés qui assurent l'étanchéité aux gaz et le confinement des matières nucléaires. Ces crayons sont remplis d'un gaz inerte conducteur (le plus souvent, de l'hélium) pressurisé ou non. Le jeu entre pastilles et gaine est très limité (par exemple, de l'ordre de 150-200p pour les réacteurs à eau légère). D'autres composants structuraux que le ressort de maintien cité plus haut peuvent être chargés en tête ou en pied du crayon (par exemple un tube intercalaire, des pastilles d'isolation, des "getters", des pastilles de couverture, ...).

Lors de la fabrication de crayons de combustible, il importe que la méthode de chargement des pastilles dans la gaine
- limite les parties de gaine exposées à la contamination et l'importance de cette contamination, aux fins de limiter voire d'éviter les opérations de nettoyage/décontamination; en particulier, évite d'incruster de la contamination dans la surface externe de la gaine, notamment dans la face d'extrémité ouverte constitutive du joint de soudure du second bouchon, ces éventuelles incrustations contribuant à augmenter le taux de crayons rebutés par non satisfaction des critères de contamination externe,
- évite de solliciter les pastilles céramiques au-delà du nécessaire, aux fins d'éviter de produire des éclats générateurs de blocages mécaniques lors du chargement et de produire, suite à l'introduction éventuelle de ces éclats dans la gaine, des crayons défectueux en raison d'espaces excessifs entre pastilles successives.

### Etat de la technique

La fabrication de crayons de combustible nucléaire, en particulier de combustible MOX, comprend donc diverses opérations déjà citées, qu'il est utile de rappeler avant de décrire l'état de la technique, tel qu'il a été rendu public et est connu des inventeurs. Ces opérations sont généralement réalisées dans des enceintes de confinement assurant une protection de l'environnement et des opérateurs contre les émetteurs α (et également β, γ) :
- présentation d'un gaine munie de son premier bouchon étanche,
- chargement des pastilles dans la gaine,
- chargement du ressort de compression des pastilles;
- remplacement de l'air de la gaine par un gaz inerte,
- nettoyage/décontamination de la partie de la gaine exposée à la contamination lors du chargement des pastilles,
- emmanchement du second bouchon,
- soudage périphérique du second bouchon,
- pressurisation éventuelle de la gaine, séparément ou en même temps que le soudage précédent,
- soudage éventuel d'un queusot, dans le cas d'une pressurisation séparée,
- mesure de la contamination de la partie de la gaine exposée à la contamination.

Les techniques mises en oeuvre par les fabricants visent à rencontrer divers objectifs qui peuvent parfois être contradictoires. Citons quelques exemples non limitatifs :
- sûreté d'exploitation : en particulier, limitation du risque de criticité lié à l'usage de liquides modérateurs de neutrons, et du risque d'incendie/explosion, par exclusion de solvants de nettoyage volatils; confinement des matières radioactives, en particulier des émetteurs α, dans des enceintes étanches, de type boîtes à gants par exemple,
- qualité du crayon de combustible produit : en particulier, qualité de la soudure (absence d'oxydation, d'inclusions, ...), absence d'éclats générateurs d'espaces entre pastilles, non contamination externe fixe ou transférable,
- industrialisation des opérations de fabrication : automatisation des opérations; productivité; limitation de l'exposition des opérateurs aux rayonnements ionisants (exposition externe ou interne); limitation des effluents solides et liquides produits lors des opérations de nettoyage/décontamination.

La recherche de ces objectifs peut conduire à choisir un ordre particulier pour réaliser les opérations décrites ci-dessus, ou à des options technologiques particulières pour réaliser telle ou telle opération afin de faciliter l'ensemble de ces opérations, au plan de la sûreté, de l'efficacité ou de la limitation des effluents, ou pour améliorer la qualité des produits. Citons ci-après quelques techniques qui influencent les procédés de fabrication de combustible MOX :
- maîtrise de l'empoussièrement des pastilles avant remplissage, par rectification humide ou sèche, par dépoussiérage des pastilles par voie mécanique ou par laser, par limitation de la fraction de rebuts recyclés dans les pastilles, par manipulation douce des pastilles,...
- chargement des pastilles dans une gaine sous air ou azote, ce qui implique de diluer celui-ci par de multiples remplissages en gaz inerte ou de tirer le vide dans la gaine afin d'y introduire ensuite le gaz inerte et, ce faisant, de contaminer l'extrémité ouverte du crayon (déjà pourvue ou non de son second bouchon),
- placement d'un second bouchon à serrage ou non, soudé circonférentiellement par le procédé TIG (Tungsten Inert Gas) le plus répandu, ce qui autorise la pressurisation dans un autre axe de travail ou une autre machine; alternativement, procédé de soudage assurant le soudage du second bouchon et la pressurisation en une seule opération (soudage par résistance ou par laser).

Diverses inventions existant en rapport avec le domaine de la présente invention sont reprises ci-après, à titre d'exemples non exhaustifs, selon qu'il y a
- utilisation d'un dispositif de centrage pour l'introduction des pastilles dans la gaine, en l'absence de dispositifs particuliers de confinement (du type boîte à gants) :
   - centrage fixe et de forme cylindrique/tronconique (voir US 4 980 119, US 4 748 798, US 5 251 244),
   - centrage triple (un fixe + deux intermédiaires) et de révolution (voir US 3 940 908),
   - centrage fixe en forme de V (voir US 3 907 123),
   - centrage fixe à section polygonale ou carrée (voir US 4 942 014), ou
- utilisation d'un dispositif de centrage pour l'introduction des pastilles dans la gaine, monté dans une enceinte de confinement (du type boîte à gants) :
   - centrage fixe tronconique monté au centre de l'enceinte (voir US 3 925 965)
   - centrage monté en limite des deux zones active et inactive de l'enceinte de confinement, la zone active étant réservée au chargement des pastilles (voir WO 98/26428).

Notons que ce dernier document mentionne la division de l'enceinte en seulement deux compartiments.
L'ensemble des dispositifs ci-dessus connus des inventeurs ne répond pas aux exigences liées à la fabrication industrielle de crayons MOX non contaminés au départ de pastilles céramiques, lesquelles, outre leur empoussièrement, génèrent des éclats de toute forme et taille, eux-mêmes générateurs de blocages et coincements mécaniques lors des opérations de chargement,
- soit que ces dispositifs ne limitent pas la partie de la gaine exposée à la contamination au strict minimum, soit qu'il n'y ait pas de gestion des niveaux de contamination dans l'enceinte de confinement (du très contaminé dans la zone de chargement jusqu'à du très peu ou du pas contaminé lorsque le crayon sort de l'enceinte de confinement), cette absence de gestion conduisant à des contaminations excessives et inutiles, qui doivent être éliminées par des opérations supplémentaires le plus souvent à base de procédés liquides générateurs d'effluents divers et de risques supplémentaires de criticité,
- soit que ces dispositifs sont sensibles aux poussières et éclats amenés par les pastilles en colonnes et/ou à ceux générés spécifiquement lors de l'opération de chargement dans la gaine, cette sensibilité se traduisant par des blocages mécaniques, générateurs d'arrêts machine, d'interventions d'opérateurs en enceintes de confinement, de risques de contamination des opérateurs, des ateliers et même parfois des compartiments des enceintes, qui devraient rester faiblement ou non contaminés,
- soit que ces dispositifs de gestion de la contamination et de chargement des pastilles ne permettent pas de fabriquer des crayons à base de plutonium conformes à leur spécification de non contamination, lorsque la teneur en plutonium des pastilles et l'activité alpha du plutonium sont importantes, même au prix d'une opération supplémentaire de décontamination liquide.

### Préseittatioiz de l'invention

La présente invention a pour but de remédier aux inconvénients cités ci-dessus, et à d'autres bien connus de l'homme de métier, et est basée à cet effet sur différentes méthodes qui influencent notablement la mise en oeuvre des opérations de fabrication ainsi que la qualité des produits fabriqués suite à une combinaison particulière, nouvelle et inventive de ces opérations et méthodes. Ainsi :
- les diverses opérations de chargement des pastilles, de nettoyage/décontamination de l'extrémité de la gaine exposée à la contamination, de placement du ressort et d'emmanchement du second bouchon (sans ou avec soudage immédiat du second bouchon, suivant que celui-ci est monté à serrage ou non), de nettoyage et de mesure de non contamination avant le retrait du crayon hors de l'enceinte peuvent être réalisées principalement dans un même axe de travail et dans des compartiments d'enceinte différents et maintenus isolés les uns des autres en fonction de l'ambiance et du niveau de contamination de l'opération correspondante; les deux derniers compartiments cités au moins étant avantageusement conçus pour que leur contamination puisse être maintenue à un niveau faible de manière durable (par exemple, en présentant une aptitude à la décontamination, bien connue de l'homme de métier) en cours d'exploitation et ce malgré les transferts successifs de nombreux crayons,
- préférentiellement les parties de la gaine introduites dans l'enceinte de confinement sont limitées au strict nécessaire, aux fins de limiter les parties exposées à la contamination et redevables d'un contrôle de contamination à la sortie et d'une éventuelle opération de nettoyage/décontamination,
- préférentiellement le chargement des pastilles a lieu avec des pastilles préalablement introduites dans une enceinte de confinement sous hélium ou sous vide et dans une gaine préalablement remplie d'hélium ou sous vide, par pompage préalable de l'air contenu. Du fait de la très faible viscosité dynamique de l'hélium, il est possible de charger les pastilles dans la gaine sous hélium à des vitesses industrielles (de l'ordre de 100-150 mm/sec), sans que l'évacuation du gaz contenu dans la gaine n'entraîne significativement des poussières vers l'extrémité ouverte du crayon,
- l'introduction des pastilles dans la gaine - ou chargement - est assurée par un dispositif d'introduction d'une géométrie interne troncopyramidale circulaire et de tolérances précises, aux fins de :
   - présenter à l'extrémité ouverte de la gaine les pastilles parfaitement alignées en position et en orientation afin d'éviter des coincements mécaniques,
   - masquer l'extrémité ouverte de la gaine aux pastilles en cours -d'introduction afin d'éviter la contamination massive de celle-ci, une éventuelle incrustation de contamination et des blocages mécaniques supplémentaires,
   - piéger et/ou collecter et/ou refouler les poussières et éclats qui pourraient conduire à un coincement des pastilles lors de leur introduction ou être introduits dans la gaine,
- le chargement des pastilles dans la gaine est assuré en colonnes présentées successivement sur une pièce en V dans l'axe de la gaine, à l'aide d'un dispositif, aux fins de limiter les efforts sur les pastilles, à entraînement sensitif, dont l'effort est limité en fonction de l'ordre de la colonne de pastilles en cours de chargement, et de longueur suffisante pour que la profondeur d'introduction d'une colonne à l'intérieur de la gaine soit supérieure à la longueur de la colonne suivante à charger; à noter que les efforts de poussée des pastilles lors du chargement dans la gaine sont limités tant en fonction de la profondeur d'introduction du poussoir que de l'ordre (N) de la colonne en cours de chargement,
- les opérations de nettoyage des parties de la gaine exposées à la contamination, sont assurées immédiatement après que la contamination ait eu lieu, et de manière sèche, aux fins d'éviter la propagation de la contamination et maîtriser le risque de criticité et la production d'effluents liquides contaminés.

Au moins, une combinaison partielle des opérations et méthodes nouvelles ci-dessus est nécessaire pour pallier les inconvénients mentionnés précédemment.

A cet effet, la méthode de l'invention comprend une organisation en étapes comme suit :
- une division de l'enceinte de confinement en plusieurs compartiments successifs,
- une liaison de chaque compartiment à son voisin pour un passage étanche de la gaine, au moins certains desdits passages étant alignés pour permettre un déplacement de 1a gaine suivant son axe longitudinal,
- une introduction de la gaine à charger, l'extrémité ouverte en avant, dans un premier compartiment à travers un passage étanche ou un orifice d'entrée vers celui-ci,
- un entraînement axial de la gaine entre compartiments successifs jusqu'à ce que son extrémité ouverte atteigne le dernier compartiment,
- un chargement des pastilles dans le dernier compartiment, et le cas échéant aussi des différents composants structuraux autres que le ressort de maintien, dans la gaine à travers son extrémité ouverte,
- un retrait axial partiel de la gaine, lorsque le chargement est terminé, de façon à amener son extrémité ouverte dans un compartiment précédent,
- dans ce compartiment précédent, un nettoyage et un éventuel contrôle de contamination d'au moins la partie de la gaine exposée à une contamination par les pastilles en cours de chargement ou par l'ambiance du dernier compartiment,
- après ce nettoyage, un déplacement axial de la gaine de façon à ce que son extrémité ouverte soit positionnée dans un autre compartiment,
- un chargement du ressort de maintien et un emmanchement du second bouchon dans l'extrémité ouverte, dans cet autre compartiment,
- après cet emmanchement, l'exécution d'éventuelles autres opérations (par exemple, soudage circonférentiel, pressurisation/queusotage,...) dans le même compartiment ou dans encore un autre compartiment, moyennant un éventuel déplacement supplémentaire de la gaine,
- un contrôle de contamination des parties du crayon exposées à la contamination des derniers compartiments et un éventuel nettoyage si nécessaire, dans le premier ou le second compartiment,
- un retrait du crayon hors du premier compartiment ou un transfert transversal vers une autre enceinte de confinement via ce premier compartiment reliant les enceintes entre elles,
- un étagement des contaminations entre les divers compartiments, partant du non ou du très faiblement contaminé dans le premier compartiment jusqu'au plus contaminé dans le dernier compartiment,
- une sélection de gaz alimentant les compartiments de l'enceinte de confinement (ainsi que les éventuelles enceintes de procédé ou de transfert présentes dans ceux-ci), choisis parmi le groupe formé de : air, azote, hélium, argon, vide, et
- un étagement des dépressions dans les compartiments, pour organiser les fuites éventuelles, de la plus faible dépression dans le premier compartiment jusqu'à la plus forte dans le dernier compartiment.

La méthode ci-dessus faisant l'objet de l'invention peut utilement être mise en oeuvre isolément ou en combinaison aussi bien dans des installations de fabrication de combustible MOX classique que dans des installations de fabrication d'un autre combustible nucléaire contenant une proportion d'actinides autres que l'uranium (à titre d'exemples non limitatifs: combustible à base de nitrures ou carbures d'uranium/plutonium, combustible sans matière fertile destiné à des réacteurs incinérateurs ou transmutateurs d'actinides, MOX à base de thorium/plutonium, MOX avec poison consommable ou non, ...).

Suivant un mode de réalisation de l'invention, pour le chargement des pastilles et les opérations associées suivantes
- présenter, centrer et aligner les pastilles d'une colonne au départ d'un support jusqu'à l'extrémité ouverte de la gaine, et
- éliminer de la colonne de pastilles les poussières et éclats amenés par et/ou adhérant aux pastilles chargées, et/ou générés par les opérations de présentation, centrage et alignement,
on effectue :
- un rattrapage des décentrements entre le support et l'extrémité ouverte de la gaine, et un alignement de l'axe des pastilles avec l'axe de la gaine, à l'aide d'un canal dont le fond a un profil en V en rampe continue et en intersection avec une sortie cylindrique au diamètre des pastilles,
- un centrage de la gaine dans une chambre centrée sur la partie cylindrique du canal,
- un masquage de l'extrémité ouverte de la gaine à la pastille en cours de chargement,
- un piégeage et/ou une collecte et/ou un refoulement des poussières et éclats, via les sections libres entre pastilles et parois du canal, par dépôt gravitaire et optionnellement par soufflage et/ou aspiration complémentaires.

La présente invention concerne également un dispositif de fabrication de crayons de combustible MOX non contaminés au départ de pastilles, pour la mise en oeuvre de la méthode de l'invention. Ce dispositif comporte une enceinte de confinement pour la réalisation des opérations suivantes :
- chargement des pastilles en colonnes dans une gaine ouverte à une extrémité et fermée par un premier bouchon à l'autre,
- nettoyage et contrôle éventuel de la contamination de la partie de ladite gaine ayant été mise en contact avec une contamination ou des poussières desdites pastilles,
- chargement de différents composants structuraux, notamment d'un ressort de maintien,
- emmanchement d'un second bouchon,
- nettoyage éventuel et contrôle de la contamination de la partie de ladite gaine ayant été mise en contact avec une contamination.

Suivant l'invention, dans ledit dispositif :
- l'enceinte de confinement est divisée en plusieurs compartiments distincts,
- les compartiments sont préférentiellement en succession l'un derrière l'autre suivant une direction de déplacement entre compartiments d'une gaine à charger, l'extrémité ouverte en avant,
- les compartiments de l'enceinte sont isolés l'un de l'autre par des cloisons étanches et comportant, pour passer la gaine d'un compartiment à l'autre, un passage composé d'une vanne à passage intégral et d'un dispositif d'étanchéité sur le pourtour de la gaine, au moins certains desdits passages étant alignés, suivant la direction de déplacement de la gaine susdite, le premier compartiment rencontré pouvant être simplement muni d'un orifice à son entrée,
- un mécanisme d'entraînement axial est agencé pour déplacer suivant son axe longitudinal l'extrémité de la gaine introduite ou du crayon pourvu de son second bouchon dans le compartiment sélectionné,
- des dispositifs de chargement des pastilles en colonnes et des moyens de chargement des divers composants structuraux autres que le ressort de maintien et le second bouchon sont installés dans le dernier compartiment,
- au moins un dispositif de nettoyage/décontamination et d'éventuels moyens de contrôle de contamination de la partie de la gaine exposée à la contamination lors du chargement des pastilles sont installés dans un compartiment précédent,
- des moyens de chargement du ressort de maintien et d'emmanchement - à serrage ou non - du second bouchon dans l'extrémité ouverte de la gaine sont installés dans un autre compartiment précédent,
- des moyens nécessaires à l'exécution d'éventuelles opérations supplémentaires de soudage et/ou de pressurisation peuvent être installés dans le même compartiment ou dans encore un autre compartiment,
- des moyens de contrôle de contamination et éventuellement de nettoyage/décontamination des parties du crayon exposées à la contamination lors des opérations précédentes sont installés dans le premier ou second compartiment, et
- des moyens de ventilation de l'enceinte de confinement, de ses compartiments et des éventuelles enceintes y installées, et des moyens d'alimentation en gaz sont installés pour maintenir l'enceinte en dépression par rapport à l'atmosphère du local et sont agencés pour assurer
   - une sélection de gaz pour chaque compartiment et/ou enceinte y installée, choisi parmi le groupe formé de : air, azote, hélium, argon, vide, et
   - un étagement des dépressions des compartiments - aux fins d'organiser le sens des fuites éventuelles et de contribuer à l'étagement des contaminations - de la plus faible dans le premier compartiment jusqu'à la plus forte dans le dernier compartiment.

Comme indiqué, les divers compartiments peuvent comporter de plus une ou des enceintes y installées - ou chambres internes - et fonctionnant sous des ambiances de gaz différant de l'ambiance du compartiment, ces enceintes ou chambres étant généralement destinées à des opérations de procédé (par exemples, chargement des pastilles sous vide, soudage sous hélium de très haute pureté, ...) ou de manutention (par exemple, transfert transversal en barillet de l'extrémité ouverte des gaines sous ambiance contrôlée).

### Avantages

Les avantages procurés par l'invention sont :
- fabrication de crayons à haute teneur en plutonium, non contaminés et sans inclusions dans la soudure ni espaces inter-pastilles excessifs,
- différentes possibilités de mise en oeuvre :
   - depuis des processus complètement manuels jusqu'à des processus complètement automatisés,
   - depuis des dispositifs de fabrication de faible/moyenne capacité (installations « monocrayon » ne traitant qu'un crayon à la fois) jusqu'à des dispositifs de grande capacité (installations « multicrayons » traitant plusieurs crayons simultanément),
   - différentes configurations de gaine/second bouchon (par exemples, bouchons emmanchés à serrage ou non dans la gaine, bouchons avec queusot axial ou transversal, ...),
   - différentes techniques de soudage circonférentiel (TIG, résistance, laser, ...) et de pressurisation,
   - différentes techniques de nettoyage/décontamination à sec (frottement mécanique, laser, ...),
- chargement sans précaution particulière de pastilles empoussiérées suite à une rectification à sec ou à des manutentions nombreuses,
- limitation de la contamination de la gaine, en surface et en importance, lors des opérations de chargement des pastilles et de remplissage du gaz inerte avant soudage, conduisant à limiter les opérations de décontamination aux seuls nettoyages par exemple par frottement de l'extrémité du crayon exposée à la contamination et mesure de non contamination transférable en sortie par frottement mécanique également,
- absence de production d'effluents liquides; production limitée d'effluents solides lors du nettoyage et de la mesure de contamination transférable par frottement,
- risque de criticité réduit, autorisant la mise en oeuvre de hautes teneurs et de grandes quantités de matière fissile,
- économie générale d'exploitation.

D'autres détails et particularités de l'invention ressortiront des autres revendications et de la description des dessins schématiques, et à échelles non définies et différentes, qui sont annexés au présent mémoire et qui illustrent, à titre d'exemples non limitatifs, la méthode de l'invention et des formes particulières du dispositif suivant l'invention ou de composants de celui-ci.

### Brève description des figures

La figure 1 montre en coupe axiale une forme de réalisation d'un crayon de combustible à fabriquer suivant la méthode de l'invention.
Les figures 2A-C montrent schématiquement une organisation en compartiments d'une enceinte de confinement pour une mise en oeuvre de l'invention, ainsi que divers agencements des équipements à l'intérieur des compartiments, pour permettre la progression de la gaine, soit déplacement transversal dudit équipement soit agencement interne dudit équipement pour transfert axial de la gaine.
La figure 2B montre schématiquement une introduction d'un crayon, à constituer suivant la figure 1, dans un premier compartiment de l'enceinte de confinement suivant diverses variantes de réalisation isolées ou groupées :
   - accès au premier compartiment par sas étanche autorisant une ambiance dans le compartiment autre que l'air du local,
   - longueur du premier compartiment supérieure à la longueur d'un crayon,
   - transfert transversal des gaine/crayon (cas d'un dispositif « multicrayons »).
La figure 2C montre schématiquement une introduction du crayon de la figure 1 de façon à aboutir dans le dernier compartiment de l'enceinte de confinement.
Les figures 3 montrent dans une vue en perspective un élément pour l'introduction des pastilles dans une gaine, destiné à la mise en oeuvre de l'invention.
La figure 3B montre des exemples de réalisation de rainures longitudinales et transversales et d'ajutages de gaz G.
Les figures 4A à 4F montrent dans une vue en plan les différentes étapes d'une séquence de chargement de colonnes successives de pastilles dans la gaine, pour une mise en oeuvre de l'invention. La figure 4A montre également un mécanisme d'entraînement d'un poussoir à effort limité. A titre d'exemple, les figures 4A à 4F montrent le chargement de deux colonnes « a » et « b » successives, en profondeur dans une gaine 2 à l'aide d'un poussoir long 53.

Dans les différentes figures, les mêmes notations de référence désignent des éléments identiques ou analogues.

### Description de l'invention

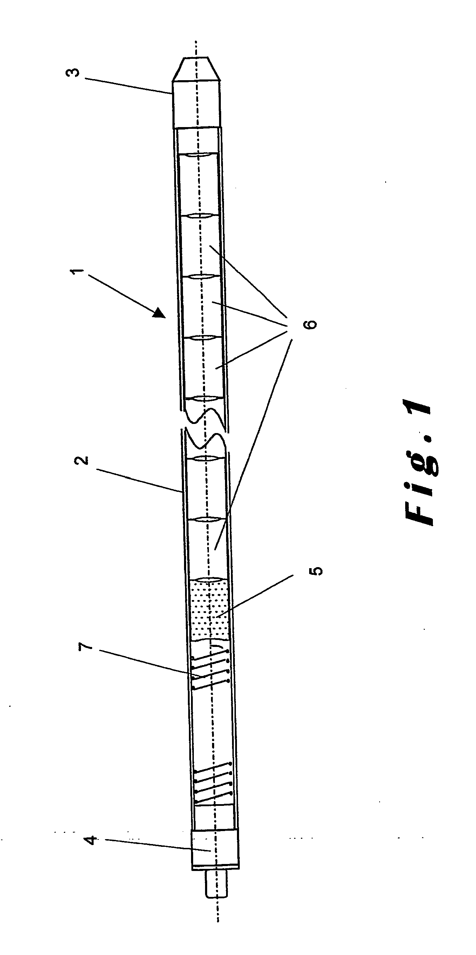

Un crayon 1 (figure 1) concerné par l'invention, peut comporter, comme déjà mentionné et comme cela est connu, une gaine 2 bouchée à une extrémité par un premier bouchon 3 et à l'autre extrémité par un second bouchon 4. Entre ces bouchons 3 et 4 peuvent être enfermés dans la gaine 2 des pastilles 6, un ressort 7 et des composants structuraux, comme un ou des éléments intercalaires 5.

Le dispositif et la méthode de fabrication de crayons 1 de combustible MOX non contaminés, au départ de pastilles 6, objet de l'invention, sont expliqués conjointement dans la présente description du fait de leur imbrication réciproque complète.

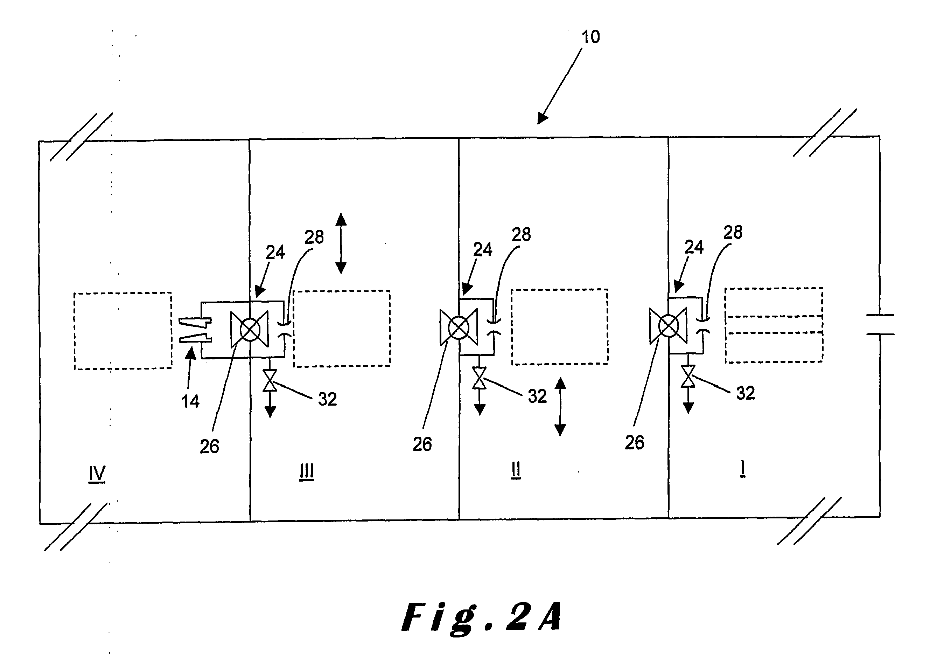

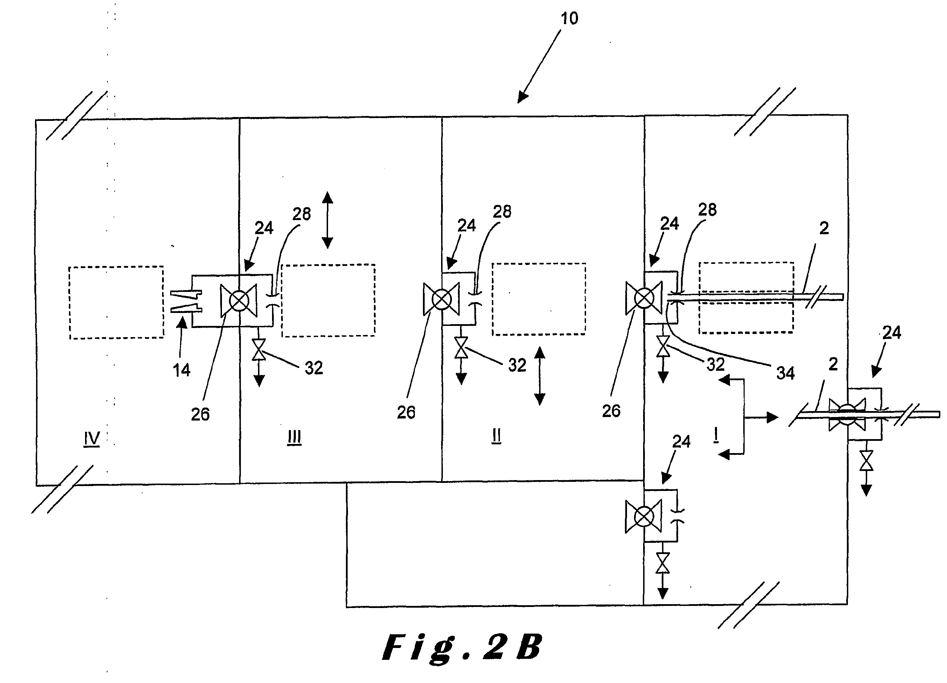

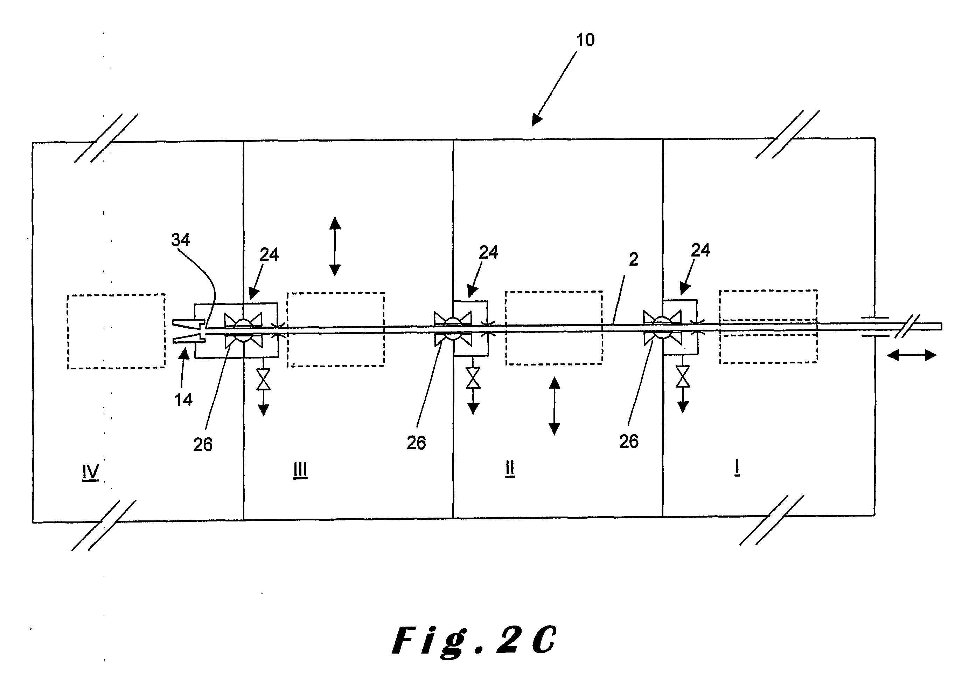

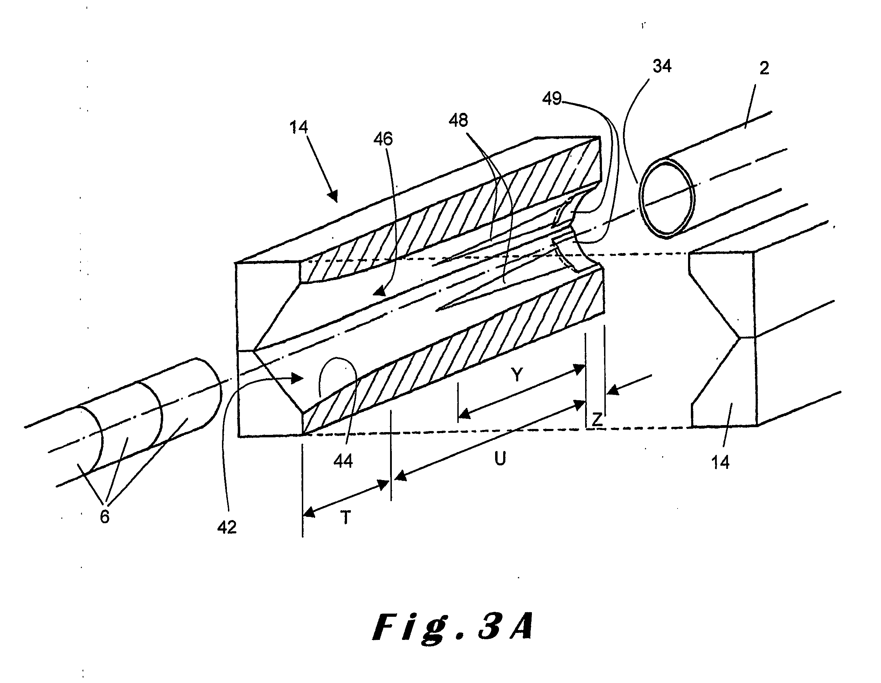

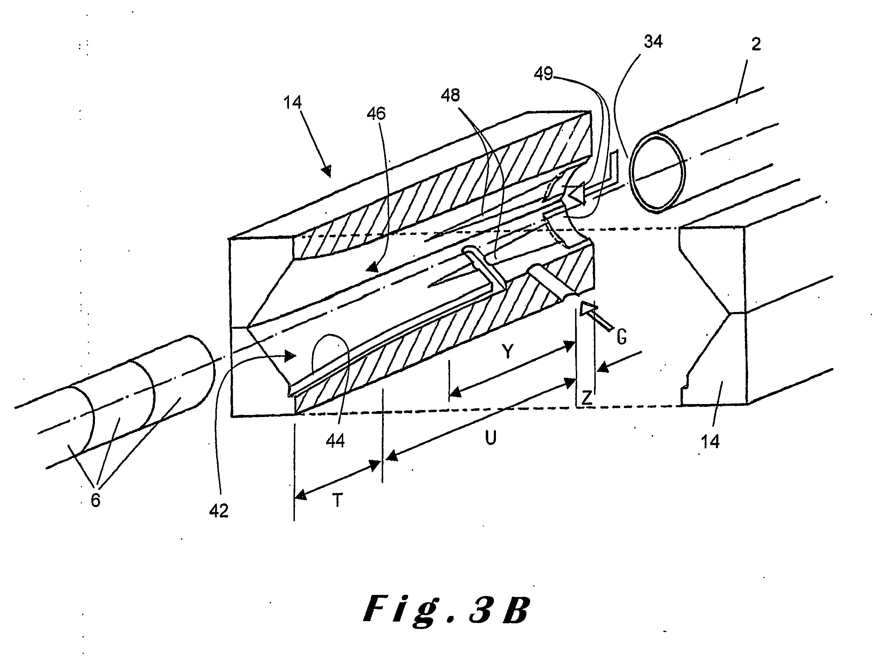

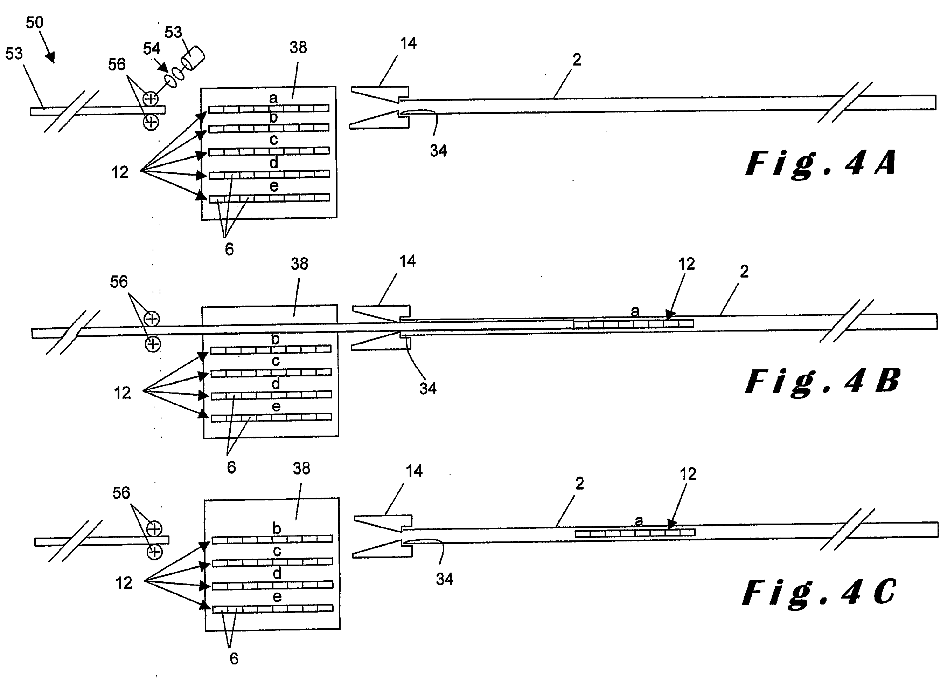

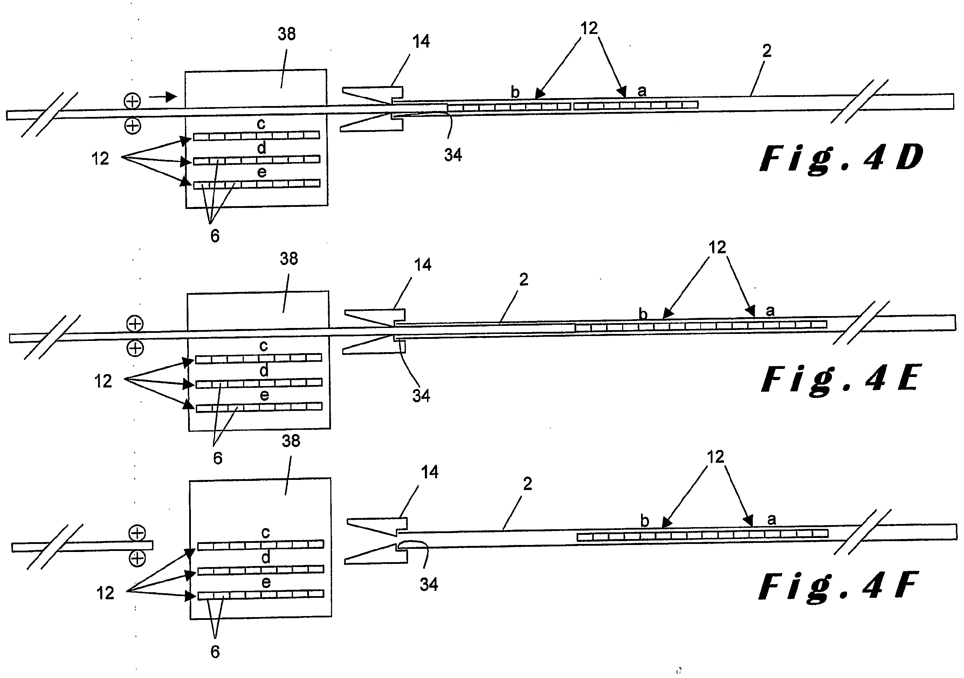

Ladite méthode consiste à réaliser les opérations suivantes dans une enceinte de confinement 10 (figures 2), par exemple du type boîte à gants comme expliqué ci-après :
- chargement des pastilles 6 en colonnes 12 (figures 4) dans une gaine 2 à l'aide d'un dispositif d'introduction (par exemple 14 détaillé aux figures 3 et schématisé aux figures 2 et 4), au départ d'un V ou d'un plateau rainuré 38 déplacé successivement dans une direction transversale à l'axe desdites colonnes 12 et de la gaine 2,
- chargement des différents composants structuraux 5, notamment d'un ressort de maintien 7,
- emmanchement d'un second bouchon 4 dans la gaine 2, soit avec serrage soit sans serrage,
- soudage circonférentiel éventuel du second bouchon 4, en particulier s'il n'est pas emmanché à serrage dans la gaine 2,
- nettoyage éventuel et contrôle de la contamination de la partie de la gaine 2 ayant été mise en contact avec des poussières ou des aérosols produits par les pastilles 6.

Suivant l'invention, il est prévu de mettre à cet effet en oeuvre les méthodes et dispositions suivantes (figures 2 à 4) :
- l'enceinte de confinement 10 est divisée en compartiments (par exemple, I, II, III et IV suivant les figures 2 dans le cas particulier de 4 compartiments) attenants et isolés entre eux de manière étanche, les niveaux de contamination par émetteurs alpha, la nature et la pression du gaz étant contrôlés dans chacun de ces compartiments,
- les opérations (chargement, nettoyage, emmanchement du bouchon, contrôle de contamination) sont réalisées en série sur la gaine 2 par déplacement axial et successif de celle-ci entre ces compartiments I -à IV, l'introduction et la sortie de ladite gaine étant assurées au départ d'un même compartiment I,
- l'étanchéité entre les compartiments I à IV et est assurée chaque fois par un sas 24 (figures 2) composé d'une vanne 26 à passage intégral pour la gaine 2 (du type à guillotine ou à boule, par exemple) et d'un organe d'étanchéité 28 à joints élastomères (joints toriques, joints à lèvres ou joints spéciaux) autour de la gaine 2; ce sas 24 permet d'admettre le crayon 1 d'un compartiment à un autre, sans rompre l'étanchéité entre compartiments et en modifiant si nécessaire au passage l'ambiance interne du crayon 1 (par exemple, pour admettre sous hélium ou sous vide une gaine 2 préalablement sous air). Dans ce dernier cas, le volume de gaz délimité par le boîtier du sas 24, la vanne 26 et le dispositif d'étanchéité 28 est pompé par une pompe à vide (non représentée) via une vanne 32 ou tout autre dispositif, et est remplacé par le gaz choisi. L'organe d'étanchéité 28 peut occuper diverses positions, soit qu'il livre un passage intégral sans contact avec la gaine, soit qu'il assure une étanchéité statique sur le pourtour de la gaine à l'arrêt, soit encore qu'il assure une étanchéité dynamique autour de la gaine lors des mouvements relatifs de translation ou de rotation de celle-ci nécessaires aux opérations de transfert ou de procédé,
- le chargement des pastilles 6 ainsi que le chargement des composants structuraux 5, autres que le ressort de maintien 7 et le second bouchon 4, ont lieu dans le compartiment IV le plus éloigné du compartiment d'introduction I,
- le nettoyage de la partie de la gaine 2 exposée à la contamination (notamment la zone d'extrémité ouverte 34) est réalisé après chargement des pastilles 6 et autres composants structuraux 5 susdits, et avant chargement des ressort 2 et second bouchon 4, dans un compartiment III de préférence attenant au compartiment de chargement IV; le nettoyage de surfaces suspectées d'avoir été contaminées est assuré par exemple par frottement à l'aide de bandes de tissu ou de non tissé, à sec ou après légère imprégnation avec un liquide (eau, solvant ou agent de décontamination chimique),
- le chargement du ressort 7 et l'emmanchement du second bouchon 4 dans la gaine 2, ainsi que l'éventuel soudage circonférentiel de ce second bouchon 4 sont réalisés dans un compartiment. II, situé entre le- compartiment de nettoyage III et un compartiment I,
- le contrôle de la non contamination et l'éventuel nettoyage des parties de la gaine 2 ayant été introduites dans les compartiments II à IV de l'enceinte de confinement 10 sont assurés dans un compartiment séparé du compartiment II. Le nettoyage peut y être effectué par frottement à sec ou légèrement humide, à l'aide par exemple de bandes de tissu ou de non tissé, sèches ou légèrement imprégnées d'un liquide (eau, solvant ou agent de décontamination). Le contrôle de non contamination peut être assuré avec ou sans contact, suivant que l'on désire ou non contrôler la contamination transférable. Dans ce dernier cas, le plus fréquent, le contrôle a lieu par réalisation d'un frottis et présentation de celui-ci à un instrument connu de l'homme de métier (par exemple, détecteur ZnS). Le contrôle de la contamination totale peut être assuré par exemple directement à l'aide d'un détecteur annulaire ZnS. On notera que d'autres techniques de nettoyage à sec sont connues, qui font par exemple appel à une illumination de la surface concernée par un faisceau de lumière laser,
- l'introduction de la gaine 2 et le contrôle de contamination du crayon 1 peuvent avantageusement être exécutés dans le même compartiment I. Cela pourra être aussi le cas par exemple si le crayon 1 est évacué vers un autre équipement situé dans une autre enceinte (cas notamment d'un bouchon 4 emmanché à serrage dans la gaine 2 de combustible pour réacteurs à eau légère, donnant lieu à soudage dans une enceinte séparée),
- les niveaux de contamination sont étagés depuis le compartiment IV jusqu'au compartiment 1 à la sortie de l'enceinte 10; ces niveaux, en particulier, ceux des compartiments I, II, III les moins contaminés, sont contrôlés (en permanence ou périodiquement) aux fins de ne pas exporter de la contamination en excès vers les compartiments I, II en aval et de limiter la contamination de la gaine 2 équipée ou non de son second bouchon 4 lors de son mouvement vers ladite sortie; en cas de contamination fortuite ou d'accumulation progressive ("buildup" en anglais) de contamination, il importe de pouvoir ramener, par des opérations de nettoyage desdits compartiments et des équipements qui y sont installés, le niveau de contamination de ces compartiments à des niveaux acceptables; la maîtrise de la contamination des compartiments de l'enceinte 10 passe aussi par des ventilation et filtration appropriées (on visera par exemple des taux de renouvellement minima de 2 à 3, sans créer des turbulences),
- les ambiances des divers compartiments I à IV susdits peuvent être constituées de divers gaz, tels que air, N₂, Ar, He (ou même vide pour le compartiment de chargement IV),
- les dépressions dans ces divers compartiments 1 à IV sont étagées pour organiser les fuites éventuelles depuis le moins contaminé vers le plus contaminé; en fonction des gaz présents dans ces compartiments, le contrôle de la cascade de dépressions est assuré par contrôle distinct de la dépression de chaque compartiment - par rapport à l'ambiance du local où se trouve l'enceinte 10 - ou par une organisation d'un flux de ventilation d'un compartiment à l'autre; on notera que les divers compartiments doivent tous être en dépression par rapport au local dans lequel est exploitée l'installation de fabrication des crayons 1.

La méthode de fabrication proposée plus haut est particulièrement avantageuse du point de vue de la maîtrise des contaminations, lorsque le chargement des pastilles 6, le nettoyage et l'emmanchement du bouchon 4 ont lieu dans des compartiments sous hélium, ce qui constitue un objet supplémentaire de l'invention. Pour ce faire, lors de son introduction dans l'enceinte 10, le transfert de la gaine 2 vide de pastilles vers le premier compartiment sous hélium rencontré (normalement celui II d'emmanchement du bouchon) a lieu après pompage de l'air du local ou de l'azote de l'enceinte de manutention contenu dans ladite gaine 2 et remplacement par de l'hélium dans le sas d'isolation 24 qui sépare les deux compartiments concernés. Comme déjà indiqué, cette option de méthode permet d'emmancher (voire de souder) le bouchon dans le crayon 1 sous hélium et permet d'éviter de devoir tirer le vide sur une gaine 2 remplie de pastilles 6 et d'air ou de l'azote, pour remplacer ce dernier par l'hélium de remplissage. On notera que, du fait de sa faible viscosité dynamique (comparée à celle de l'air ou de l'azote, gaz habituels des enceintes de confinement), l'éjection de l'hélium contenu dans la gaine 2 lors de l'introduction des colonnes 12 de pastilles 6 a lieu sans entraînement notable de poussières et aérosols vers l'extrémité ouverte 34 du crayon 1.

La méthode de fabrication proposée plus haut est également avantageuse, lorsque le chargement des pastilles a lieu sous vide; dans ce cas, la gaine est présentée vide de pastilles et de gaz à l'entrée du dernier compartiment sous vide (ou contenant une chambre sous vide), après avoir été vidé de son gaz dans le sas d'isolation 24 d'accès à ce compartiment; diverses options d'ambiance des compartiments de nettoyage et d'emmanchement (et de soudage) sont possibles; une ambiance d'hélium dans ces deux compartiments, combinée à une ambiance de vide dans le compartiment de chargement présente des avantages particuliers sur le plan de la maîtrise des contaminations, malgré une plus grande complexité de réalisation.

Lors de l'opération de chargement des pastilles 6, il importe de
- présenter les pastilles 6 à l'extrémité ouverte 34 de la gaine 2 de façon parfaitement alignée avec celle-ci en position et en orientation afin d'éviter les coincements mécaniques,
- masquer l'extrémité ouverte 34 de la gaine 2 aux pastilles 6 en cours d'introduction afin d'éviter la contamination massive de celle-ci et de produire des interférences et blocages mécaniques supplémentaires,
- piéger et/ou collecter et/ou refouler les poussières et éclats qui pourraient conduire au coincement des pastilles 6 lors de leur introduction, voire produire des crayons défectueux et qui sont soit amenés par lesdites pastilles 6 en cours de chargement, soit produits au cours de l'opération de chargement elle-même.

A cette fin, on peut utiliser le dispositif d'introduction 14 (figures 3) des pastilles 6, lesquelles sont le plus souvent présentées en colonnes 12 sur un V fixe ou (figures 4) sur un plateau 38 connu, rainuré en V et déplaçable transversalement; ce dispositif de chargement, objet complémentaire de l'invention, est constitué d'une pièce métallique 14 fixe creuse, formée par exemple de deux parties et dont le profil interne 42 est constitué successivement, notamment comme le représentent les figures 3, d'une entrée carrée sur pointe 44, d'un tronçon 46 à section carrée sur pointe et en réduction continue (T + U), d'une sortie cylindrique 48 de révolution (Y) au diamètre des pastilles 6, en raccord continu avec le tronçon à section carrée 46 et enfin d'un alésage cylindrique 49 au diamètre externe de la gaine 2 (Z). L'entrée carrée (T) sur pointe 44 autorise des jeux importants (jusqu'à 1 à 2 mm) aux pastilles 6 aux fins d'accepter des désalignements d'origines multiples (par exemple, désalignement vertical et horizontal des V du plateau rainuré 38 présentant les colonnes 12 de pastilles 6). Le tronçon de section carrée sur pointe 46 présente des dimensions continûment décroissantes (T + U), afin de centrer progressivement les pastilles 6; diverses lois géométriques de réduction peuvent être reproduites avec les machines à commande numérique modernes, par exemple (figures 3) depuis une réduction linéaire conduisant à un tronc de pyramide (U) jusqu'à une réduction non-linéaire (T) (par exemple quadratique) permettant de rattraper des désalignements importants sur de courtes longueurs et de contribuer à libérer des poussières et éclats, par suite du changement d'orientation relative des pastilles entre elles. Quant aux deux sections circulaires de 48 et 49, les deux alésages D_{Y} et D_{Z} sont taillés respectivement aux diamètres des pastilles (D_{Ynom} = Dpast ₘₐₓ + 0.02 mm, par exemple) et des gaines (D_{Znom} = Dgai ₘₐₓ + 0,01 mm, par exemple) avec une concentricité de 0,01mm et des tolérances diamétrales de -0/+0,01mm. Cette pièce d'introduction peut encore être pourvue (figure 3B) de divers orifices d'injection de gaz ou de captation pour piéger, collecter ou refouler les poussières et éclats adhérant aux ou amenés par les pastilles. Des rainures longitudinales et/ou transversales peuvent encore être usinées dans la pièce 14 pour contribuer au piégeage des éclats et poussières. On notera que dans d'autres formes de réalisation possibles de l'invention la partie supérieure du canal 42 peut avoir une autre forme qu'un V inversé.

On notera encore que le dispositif d'introduction 14 peut être utilisé pour l'introduction directe des pastilles dans la gaine, comme pour le centrage et l'alignement des pastilles dans tout dispositif intermédiaire prévu avant la gaine.

Lors du chargement des colonnes de pastilles 12, il importe de limiter les efforts axiaux à mettre en oeuvre dans le but de
- éviter les efforts transversaux des colonnes 12 sous pression axiale et pouvant résulter des défauts de perpendicularité des faces d'extrémité des pastilles 6; ces efforts sont préjudiciables lorsque les pastilles 6 franchissent les transitions mécaniques (V ou plateau rainuré 38 vers pièce d'introduction 14, pièce d'introduction 14 vers gaine 6), et
- éviter de produire des éclats et poussières supplémentaires au cours du chargement, par excès de pression locale sur les arêtes des pastilles 6 en contact par leurs faces d'extrémité.

Pour ce faire, trois méthodes sont utilisées séparément ou en combinaison :
- charger les pastilles 6 sous un gaz à faible viscosité dynamique (hélium) ou sous vide afin de limiter la pression dans la gaine 2 lors de l'enfoncement des colonnes de pastilles 12; notons par exemple que plus on progresse dans le chargement des colonnes de pastilles, plus pour une même vitesse de chargement la pression du gaz augmente du fait de la perte de charge croissante le long de la colonne de pastilles 12,
- enfoncer les colonnes 12 en cours de chargement (figures 4) dans la gaine 2, d'une profondeur au moins égale à la longueur des colonnes élémentaires 12; de la sorte, la première pastille 6 d'une colonne N (N allant de « a » à « e » dans l'exemple représenté en figures 4), lors de son chargement dans la gaine 2, n'entre en contact avec la dernière pastille 6 de la colonne (N-1) déjà chargée et ne pousse le train des (N-1) colonnes déjà chargées, que lorsque la dernière pastille de la colonne N est déjà à l'intérieur de la gaine 2; les efforts transversaux développés par les pastilles 6 sont ainsi minimisés et d'un préjudice limité pour celles-ci, du fait de l'excellent guidage mécanique procuré par la gaine 2,
- utiliser un mécanisme 50 de poussée des pastilles à entraînement sensitif, à savoir qui vise à limiter de manière générale les efforts que peut développer celui-ci aux seuls efforts nécessaires; en effet, les efforts requis augmentent au fur et à mesure qu'un plus grand nombre de colonnes élémentaires 12 sont chargées. Ces efforts sont par exemple limités électroniquement par contrôle de l'alimentation électrique d'un moteur à courant continu ou servomoteur 52 en fonction de la profondeur d'introduction du poussoir et de l'ordre N de la colonne chargée; enfin, compte tenu que les vitesses de chargement industrielles sont importantes, on veillera à éviter les effets d'inertie en utilisant un poussoir 53 de pastilles à tige creuse et un limiteur de couple 54 à glissement et faible inertie, par exemple à poudre magnétique.

La réduction de la vitesse de poussée du train de colonnes de pastilles peut être avantageusement réalisée pour la ou les dernières colonnes chargées.

### Mode de réalisation

Divers modes de division de l'enceinte et de répartition des opérations qui y sont réalisées sont possibles. On trouvera en tableau 1 quelques exemples possibles.

| ***TABLEAU 1 - Exemples de Réalisation possibles*** | | | | | | |
|---|---|---|---|---|---|---|
| | ***Compartiments*** | | | | | |
| **#** | **I** | **II** | **III** | **IV** | **V** | ***Remarques*** |
| **1** | Entrée gaine Contrôle décontamination Sortie crayon (Air ou Hélium) | Chargement ressort Emmanchement 2° bouchon (Soudage bouchon, si bouchon libre) (Hélium) | Nettoyage gaine (Hélium) | Chargement pastilles (Hélium) | | Dispositif monocrayon mono crayon |
| 2 | Entrée/Sortie gaine (Variante: transfert gaine vers autre enceinte) (Air ou N₂) | Contrôle contamination Nettoyage éventuel (Air ou N₂) | Chargement ressort Emmanchement 2° bouchon (Soudage bouchon, si bouchon libre) (Air ou N₂) | Nettoyage gaine (Air ou N₂) | Chargement pastilles (Air ou N₂) | Dispositif multicrayons |
| 3 | Entrée gaine Sortie crayon (Air) | Contrôle contamination Nettoyage éventuel (Air) | Chargement ressort Emmanchement 2° bouchon (Soudage bouchon si bouchon libre) (Hélium) | Chargement pastilles sous vide (Air) | | Dispositif monocrayon |
| 4 | Entrée gaine Contrôle contamination Sortie gaine (Air) | Transfert sous vide vers autres dispositifs (emmanchement, soudage,..) (Air) | Chargement pastilles sous vide (nettoyage gaine sous vide optionnel) (Air) | | | Dispositif multicrayons (barillet rotatif) |
| ***Remarque*** : l'enceinte de confinement alpha est divisée en 3 à 5 compartiments étanches entre eux; dans certains cas, l'ambiance d'un compartiment peut être différente de l'ambiance sous laquelle une opération est effectuée; dans ce cas, le compartiment concerné est pourvu d'une enceinte étanche ou chambre (par exemple, enceinte de chargement sous vide ou chambre de soudage sous hélium) | | | | | | |

On trouvera ci-après des détails relatifs au mode de réalisation 1, du tableau 1, mis en oeuvre par les inventeurs.

### a. Succession des opérations

- chargement des pastilles 6 contenant des rebuts de fabrication et rectifiées à sec sur un plateau rainuré 38 déplacé transversalement pas à pas,
- ambiance et répartition des fonctions par compartiment :
   IV : sous hélium - chargement des pastilles,
   III : sous hélium - nettoyage de l'extrémité ouverte,
   II : sous hélium - chargement du ressort et bouchon non serrant,
      - soudage périphérique du second bouchon,
   I : sous air - nettoyage éventuel de l'extrémité du crayon,
      - frottis pour mesure de la contamination transférable,
      - retrait du crayon en vue de sa pressurisation, dans un autre équipement,
- isolation des compartiments : par sas 24 constitué d'une vanne à vide à passage intégral et joint élastomère double, avec gaz ou vide de barrage.

L'hélium présent dans les différents compartiments est distribué au départ d'une centrale de purification (recyclage) de l'hélium extrait de l'enceinte pour maintenir celle-ci en dépression et d'hélium frais pour compenser les fuites, tandis que l'enceinte de soudage du compartiment II est alimentée directement en hélium de haute pureté.

Une variante consiste à alimenter le compartiment I en hélium aux fins des fabrications de combustible MOX pour réacteurs à eau bouillante.

### b. Produits et spécifications (non limitatif)

- teneur en plutonium total des pastilles (%) : 9,5
- isotopie du plutonium Pu^{238,239,240,241,242} (%) : 2-57-27-8-6
- teneur en Am²⁴¹ (%) : 2
- activité α du plutonium (10¹⁰ Bq/g) : 1,8
- teneur en rebuts de fabrication (%) : 22
- diamètre des pastilles (mm) : 7-12
- vitesse de chargement des pastilles (mm/sec) : 100-150
- soudage périphérique : TIG
- matériau de gaine : alliage de : Zr
- contamination α des compartiments respectivement de chargement, de nettoyage, de soudage et de contrôle de contamination (Bq/dm²) : >>10⁶, <10³, 10²- 10¹, <1
- contamination α transférable des crayons (Bq/dm² sur frottis) <1
- contamination α fixée dans la soudure (Bq) <20

## Revendications

1. Méthode de fabrication de crayons (1) de combustible MOX non contaminés, au départ de pastilles (6), dans une enceinte de confinement (10) en dépression, la méthode comportant les opérations suivantes pour un crayon (1) :
- un chargement des pastilles (6) en colonnes (12) successives dans une gaine (2) munie préalablement d'un premier bouchon (3) à une de ses deux extrémités,
- un chargement de différents composants structuraux, notamment d'un ressort de maintien (7),
- un emmanchement d'un second bouchon (4) à l'autre extrémité de la gaine (2),
- un soudage périphérique dudit second bouchon (4), en particulier s'il n'est pas emmanché à serrage dans ladite gaine (2), et
- au moins un nettoyage et au moins un contrôle de la contamination des parties de ladite gaine (2) ou respectivement du crayon (1) ayant été exposées à une contamination,
la méthode étant ***caractérisée en ce qu'***elle comprend :
- une division de l'enceinte de confinement (10) en plusieurs compartiments successifs,
- une liaison de chaque compartiment à son voisin pour un passage étanche de la gaine (2), au moins certains desdits passages étant alignés pour permettre un déplacement de la gaine (2) suivant un axe longitudinal,
- une introduction de la gaine (2) à charger, l'extrémité ouverte (34) en avant, dans un premier compartiment à travers un passage étanche ou un orifice d'entrée vers celui-ci,
- un entraînement axial de la gaine (2) entre compartiments successifs jusqu'à ce que son extrémité ouverte (34) atteigne le dernier compartiment,
- un chargement des pastilles (6) dans le dernier compartiment, et le cas échéant aussi des différents composants structuraux (5) autres que le ressort de maintien (7), dans la gaine (2) à travers son extrémité ouverte (34),
- un retrait axial partiel de la gaine (2), lorsque le chargement est terminé, de façon à amener son extrémité ouverte (34) dans un compartiment précédent,
- dans ce compartiment précédent, un nettoyage et un éventuel contrôle de contamination d'au moins la partie de la gaine (2) exposée à une contamination par les pastilles (6) en cours de chargement ou par l'ambiance du dernier compartiment,
- après ce nettoyage, un déplacement axial de la gaine (2) de façon à ce que la zone d'extrémité ouverte (34) soit positionnée dans un autre compartiment,
- un chargement du ressort de maintien (7) et un emmanchement du second bouchon (4) dans l'extrémité ouverte (34), dans cet autre compartiment,
- après cet emmanchement, l'exécution d'éventuelles autres opérations dans le même compartiment ou dans encore un autre compartiment, moyennant un éventuel déplacement supplémentaire,
- un contrôle de contamination des parties du crayon (1) exposées à la contamination des derniers compartiments et un éventuel nettoyage si nécessaire, dans le premier ou le second compartiment,
- un retrait du crayon (1) hors du premier compartiment ou un transfert transversal vers une autre enceinte de confinement via un premier compartiment reliant les enceintes entre elles,
- un étagement des contaminations entre les divers compartiments, partant du non ou du très faiblement contaminé dans le premier compartiment jusqu'au plus contaminé dans le dernier compartiment,
- une sélection de gaz alimentant les compartiments, choisis parmi le groupe formé de air, azote, hélium, argon, vide,
- un étagement des dépressions dans les compartiments, pour organiser les fuites éventuelles, de la plus faible dépression dans le premier compartiment jusqu'à la plus forte dans le dernier compartiment.

2. Méthode suivant la revendication 1, **caractérisée en ce que**, pour le chargement des pastilles (6) et les opérations associées suivantes :
- présenter, centrer et aligner les pastilles (6) d'une colonne (12) au départ d'un support (38) jusqu'à l'extrémité ouverte (34) de la gaine (2), et
on effectue :
- un rattrapage des décentrements entre le support (38) et l'extrémité ouverte (34) de la gaine (2), et un alignement de l'axe des pastilles (6) avec l'axe de la gaine (2), à l'aide d'un canal (42) dont le fond a un profil en V en rampe continue et en intersection avec une sortie cylindrique au diamètre des pastilles (6),
- un centrage de la gaine (2) dans une chambre centrée sur la partie cylindrique du canal,
- un masquage de l'extrémité ouverte (34) de la gaine (2) aux pastilles (6) en cours de chargement,
- un piégeage et/ou une collecte et/ou un refoulement des poussières et éclats amenés par et/ou adhérant aux pastilles (6) chargées, et/ou générés par les opérations de présentation, centrage et alignement, via les sections libres entre pastilles (6) et parois du canal et/ou des rainures, par dépôt gravitaire et optionnellement par soufflage et/ou aspiration complémentaires.

3. Méthode suivant l'une ou l'autre des revendications 1 et 2, **caractérisée par** un chargement des pastilles (6) d'une colonne dans la gaine (2), jusqu'à une profondeur d'introduction de la dernière pastille (6) dans la gaine (2) au moins égale à la longueur de la colonne suivante à charger dans la même gaine (2).

4. Méthode suivant l'une quelconque des revendications 1 à 3, **caractérisée en ce que** le chargement desdites pastilles (6) en colonnes successives dans ladite gaine (2) est effectué en limitant les efforts maximaux de poussée lors du chargement, en fonction de la profondeur d'introduction du poussoir et de l'ordre (N) de la colonne en cours de chargement dans la même gaine (2).

5. Méthode suivant l'une quelconque des revendications 1 à 4, **caractérisée par** un procédé à sec ou légèrement humide pour le nettoyage des parties de la gaine (2), ou respectivement du crayon (1), exposées à une contamination, ce procédé pouvant être par frottement.

6. Méthode suivant l'une quelconque des revendications 1 à 5, **caractérisée en ce que** l'on divise l'enceinte en quatre compartiments (I-IV) dont
- le quatrième et dernier compartiment (IV) est destiné au chargement des pastilles (6) et d'éléments structuraux,
- le troisième (III) est destiné au nettoyage de la partie exposée à une contamination lors du chargement,
- le deuxième (II) est destiné au chargement du ressort (7) et à l'emmanchement du second bouchon (4), ainsi qu'à un éventuel soudage circonférentiel de celui-ci si l'emmanchement n'est pas à serrage, et
- le premier (I) est destiné au contrôle de contamination et à l'éventuel nettoyage des parties exposées à la contamination dans les compartiments précédents, ainsi qu'à l'entrée de la gaine et la sortie du crayon.

7. Méthode suivant l'une quelconque des revendications 1 à 6, **caractérisée en ce que**
- le chargement des pastilles (6), le nettoyage de l'extrémité de la gaine (2) exposée à contamination et l'emmanchement du second bouchon (4) sont effectués dans des compartiments sous hélium, ainsi que facultativement la mesure de contamination à la sortie,
- lors de l'introduction d'une gaine (2) vide de pastilles dans l'enceinte de confinement (10), on ne transfère son extrémité ouverte (34) dans le premier compartiment sous hélium rencontré qu'après avoir pompé et remplacé, entre ce compartiment et le précédent, le gaz contenu dans la gaine (2) par de l'hélium.

8. Méthode suivant l'une quelconque des revendications 1 à 6, **caractérisée en ce que**
- le chargement des pastilles (6) est effectué dans le dernier compartiment sous vide ou dans une enceinte sous vide localisée dans celui-ci et,
- lors de l'introduction d'une gaine (2) vide de pastilles (6) dans l'enceinte de confinement (10), on ne transfère son extrémité ouverte (34) dans ce dernier compartiment qu'après avoir pompé, entre ce compartiment et le précédent, le gaz contenu dans la gaine (2).

9. Dispositif de fabrication de crayons (1) de combustible MOX non contaminés au départ de pastilles (6), pour la mise en oeuvre de la méthode suivant l'une quelconque des revendications 1 à 8, et comportant une enceinte de confinement (10) pour la réalisation des opérations suivantes :
- chargement des pastilles (6) en colonnes (12) dans une gaine (2) ouverte à une extrémité et fermée par un premier bouchon (3) à l'autre,
- nettoyage et contrôle éventuel de la contamination de la partie de ladite gaine (2) ayant été mise en contact avec une contamination ou des poussières desdites pastilles (6),
- chargement de différents composants structuraux, notamment d'un ressort de maintien (7),
- emmanchement d'un second bouchon (4),
- contrôle de la contamination et nettoyage éventuel de la partie de ladite gaine (2) ayant été mise en contact avec une contamination,
le dispositif étant ***caractérisé en ce que** :*
- l'enceinte de confinement (10) est divisée en plusieurs compartiments distincts,
- les compartiments sont préférentiellement en succession l'un derrière l'autre suivant une direction de déplacement entre compartiments d'une gaine (2) à charger, l'extrémité ouverte (34) en avant,
- les compartiments de l'enceinte sont isolés l'un de l'autre par des cloisons étanches et comportant, pour passer la gaine (2) d'un compartiment à l'autre, un passage étanche (24), lui-même composé d'une vanne (26) à passage intégral et d'un dispositif d'étanchéité (28) sur le pourtour de la gaine (2), au moins certains desdits passages (24) étant alignés suivant la direction de déplacement de la gaine (2) susdite, le premier compartiment rencontré pouvant être simplement muni d'un orifice à son entrée,
- au moins un mécanisme d'entraînement axial est agencé pour déplacer suivant son axe longitudinal l'extrémité de la gaine (2) introduite ou du crayon (1) pourvu de son second bouchon (4) dans le compartiment sélectionné,
- des dispositifs de chargement des pastilles (6) en colonnes (12) et des moyens de chargement des divers composants structuraux (5), autres que le ressort de maintien (7) et le second bouchon (4), sont installés dans le dernier compartiment,
- au moins un dispositif de nettoyage et d'éventuels moyens de contrôle de contamination de la partie de la gaine (2) exposée à la contamination lors du chargement des pastilles (6) sont installés dans un compartiment précédent,
- des moyens de chargement du ressort de maintien (7) et d'emmanchement - à serrage ou non - du second bouchon (4) dans l'extrémité ouverte (34) de la gaine (2) sont installés dans un autre compartiment précédent,
- des moyens nécessaires à l'exécution d'éventuelles opérations supplémentaires de soudage et/ou de pressurisation peuvent être installés dans le même compartiment ou dans encore un autre compartiment,
- des moyens de contrôle de contamination et éventuellement de nettoyage des parties du crayon (1) exposées à la contamination lors des opérations précédentes sont installés dans le premier ou second compartiment,
- des moyens de ventilation de l'enceinte (10), de ses compartiments et des éventuelles enceintes y installées, et des moyens d'alimentation en gaz sont installés pour maintenir l'enceinte (10) en dépression par rapport à l'atmosphère du local et sont agencés pour assurer
- une sélection de gaz pour chaque compartiment, choisi parmi le groupe formé de air, azote, hélium, argon, vide, et
- un étagement des dépressions des compartiments - aux fins d'organiser le sens des fuites éventuelles et de contribuer à l'étagement des contaminations - de la plus faible dans le premier compartiment jusqu'à la plus forte dans le dernier compartiment.

10. Dispositif suivant la revendication 9, **caractérisé en ce qu'**il comporte un dispositif (14) de présentation, centrage et alignement des pastilles (6) en vue de leur chargement dans la gaine (2), lui-même
- étant constitué d'une pièce métallique (14) fixe traversée d'un canal (42) - dont les dimensions de l'entrée (44) sont choisies pour accepter un décentrage des pastilles (6) vis-à-vis de l'axe de la gaine (2) et dont le fond a un profil en V en rampe continue et en intersection avec une sortie cylindrique (48) au diamètre des pastilles (6) - et pourvue d'une chambre cylindrique (49) au diamètre de la gaine (2) et centrée sur la sortie cylindrique (48) du canal,
- présentant des dimensions et tolérances adaptées aux dimensions desdites pastilles (6) et gaine (2), et telles que le diamètre de la sortie cylindrique (48) du canal est inférieur au diamètre intérieur de la gaine (2), aux fms de masquer l'extrémité de la gaine (2) aux pastilles (6),
- présentant facultativement des dégagements longitudinaux et/ou .transversaux et des ajutages pour souffler un gaz dans un sens inverse au sens du chargement et/ou aspirer les poussières et éclats.

11. Dispositif suivant l'une ou l'autre des revendications 9 et 10, **caractérisé en ce qu'**il comprend, pour le chargement des pastilles (6) et des composants structuraux, un mécanisme de poussée (50) à entraînement sensitif, comportant
- d'une part un entraînement axial par un jeu de galets (56) équipés d'un limiteur d'effort (54) à faible inertie et entraînés par un moteur (52) dont l'effort est limité en fonction de la profondeur d'introduction du poussoir (53) et de l'ordre (N) de la colonne de pastilles (6) en cours de chargement dans la même gaine (2), et
- d'autre part une tige creuse (53) de faible masse et de longueur adaptée, pour que la profondeur d'introduction de la dernière pastille (6) d'une colonne chargée dans la gaine (2) soit au moins égale à la longueur de la colonne suivante à charger dans la même gaine (2).

12. Dispositif suivant l'une quelconque des revendications 9 à 11, **caractérisé en ce qu'**il comporte au moins un dispositif de nettoyage à sec ou légèrement humide des parties de la gaine (2) ou respectivement du crayon (1) exposées à une contamination.

13. Dispositif suivant l'une quelconque des revendications 9 à 12, **caractérisé en ce qu'**un au moins des dispositifs de nettoyage comporte un système à bandes, de matériau tissé ou non tissé, frottant à sec ou après légère humidification sur les parties de ladite gaine (2) ou respectivement du crayon (1) ayant été exposées à une contamination,

14. Dispositif suivant l'une quelconque des revendications 9 à 13, **caractérisé en ce que** l'enceinte de confinement (10) est constituée de quatre compartiments, dont
- le quatrième et dernier (IV) comporte les dispositifs de chargement des pastilles (6) en colonnes (12) et les moyens de chargement des divers composants structuraux, autres que le ressort (7) et le second bouchon (4),
- le troisième (III) comporte des moyens de nettoyage de la partie de la gaine (2) exposée à la contamination lors du chargement,
- le deuxième (II) comporte des moyens de chargement du ressort de maintien (7) et d'emmanchement - à serrage ou non - du second bouchon (4),
- le premier compartiment (I) d'entrée/sortie comporte des moyens de contrôle de contamination et éventuellement un dispositif de nettoyage.

15. Dispositif suivant l'une quelconque des revendications 9 à 14 **caractérisé en ce que** les passages étanches (24) entre compartiments comprennent au moins
- une vanne (26) qui peut soit être totalement fermée soit libérer un passage intégral sans contact pour une gaine (2) ou respectivement un crayon (1),
- un organe à joint d'étanchéité (28) agencé pour soit libérer un passage intégral sans contact pour une gaine (2) soit former une étanchéité autour d'une gaine (2) soit arrêtée à cet endroit soit en mouvement relatif de rotation ou de translation, et
- un dispositif de pompage du gaz emprisonné dans le volume compris entre la vanne (26) et l'organe d'étanchéité (28), tous deux fermés, et d'éventuel remplissage de ce même volume avec un autre gaz.

16. Dispositif suivant l'une quelconque des revendications 9 à 15, **caractérisé en ce qu'**au moins un dispositif d'alimentation en gaz est agencé pour alimenter lesdits compartiments - et les éventuelles chambres y installées - en divers gaz choisis parmi le groupe air, N₂, Ar, He et vide.

17. Dispositif suivant l'une quelconque des revendications 9 à 16, **caractérisé en ce qu'**il comporte un système de distribution d'hélium, en circuit soit ouvert soit fermé en recyclage ou encore une combinaison des deux, destiné à alimenter les compartiments de chargement des pastilles (6), de nettoyage subséquent et d'emmanchement du second bouchon (4).

18. Dispositif suivant l'une quelconque des revendications 9 à 16, **caractérisé en ce que** le dernier compartiment destiné au chargement des pastilles (6) comporte des moyens de chargement des pastilles (6) dans la gaine (2) sous vide.

19. Dispositif suivant l'une quelconque des revendications 9 à 18, **caractérisé en ce que** le compartiment comportant les moyens d'emmanchement comporte également un dispositif de soudage circonférentiel du second bouchon (4) à la gaine (2), lorsque ledit bouchon est monté sans serrage dans la gaine (2).

## Claims

1. Method for manufacturing non-contaminated MOX fuel rods (1), from pellets (6), in a containment enclosure (10) under a depression, the method comprising the following operations for one rod (1):
- loading of the pellets (6) in successive columns (12) into a cladding (2) previously provided with a first cap (3) at one of its two ends;
- loading of various structural components, in particular a retaining spring (7);
- fitting of a second cap (4) at the other end of the cladding (2);
- girth welding of said second cap (4), in particular if it is not fitted with clamping in said cladding (2); and
- at least one cleaning and at least one checking of the contamination of the parts of said cladding (2) or respectively of the rod (1) which have been exposed to contamination,
the method being **characterised in that** it comprises:
- division of the containment enclosure (10) into a number of successive compartments;
- connection of each compartment to its neighbour for a sealed passage for the cladding (2), at least certain of said passages being aligned in order to allow a movement of the cladding (2) along a longitudinal axis;
- introduction of the cladding (2) to be loaded, the open end (34) in front, into a first compartment through a sealed passage or an input aperture thereto;
- axial driving of the cladding (2) between successive compartments until its open end (34) reaches the last compartment;
- loading of the pellets (6) in the last compartment, and if applicable also various structural components (5) other than the retaining spring (7), into the cladding (2) through its open end (34);
- partial axial withdrawal of the cladding (2), when the loading is finished, so as to convey its open end (34) into a preceding compartment;
- in this preceding compartment, cleaning and a possible contamination check of at least the part of the cladding (2) exposed to contamination by the pellets (6) in the process of being loaded or by the atmosphere of the last compartment;
- after this cleaning, axial movement of the cladding (2) so that the open end area (34) is positioned in another compartment;
- loading of the retaining spring (7) and fitting of the second cap (4) in the open end (34), in this other compartment;
- after this fitting, carrying out of possible other operations in the same compartment or in yet another compartment, with a possible additional movement;
- contamination checking of the parts of the rod (1) exposed to the contamination of the last compartments and possible cleaning if necessary, in the first or the second compartment;
- withdrawal of the rod (1) out of the first compartment or a transverse transfer to another containment enclosure via a first compartment connecting the enclosures to one another;
- stepping of the contaminations between the various compartments, starting from the non-contaminated or the very slightly contaminated in the first compartment to the most contaminated in the last compartment;
- selection of gases supplying the compartments, chosen from amongst the group formed by: air, nitrogen, helium, argon, vacuum;
- stepping of the depressions in the compartments, in order to organise any leaks, from the weakest depression in the first compartment to the strongest in the last compartment.

2. Method according to Claim 1, **characterised in that**, for loading of the pellets (6) and the following associated operations:
- presenting, centring and aligning the pellets (6) of a column (12) from a support (38) to the open end (34) of the cladding (2); and
the following are performed:
- correction of off-centrings between the support (38) and the open end (34) of the cladding (2), and alignment of the axis of the pellets (6) with the axis of the cladding (2), by means of a channel (42), the bottom of which has a V-shaped profile in a continuous ramp and intersecting with a cylindrical output with the diameter of the pellets (6);
- centring of the cladding (2) in a chamber centred on the cylindrical part of the channel;
- masking of the open end (34) of the cladding (2) from the pellets (6) in the process of being loaded;
- trapping and/or collection and/or forcing back of dust and chips conveyed by and/or adhering to the pellets (6) loaded, and/or generated by the presentation, centring and alignment operations, via the free sections between pellets (6) and walls of the channel and/or grooves, by gravity deposition and optionally by additional blowing and/or suction.

3. Method according to one or other of Claims 1 and 2, **characterised by** loading of the pellets (6) of a column into the cladding (2), to a depth of introduction of the last pellet (6) in the cladding (2) equal to at least the length of the next column to be loaded into the same cladding (2).

4. Method according to any one of Claims 1 to 3, **characterised in that** loading of said pellets (6) in successive columns into said cladding (2) is performed by limiting the maximum pushing forces during loading, according to the depth of introduction of the pushing device and the order (N) of the column in the process of being loaded into the same cladding (2).

5. Method according to any one of Claims 1 to 4, **characterised by** a dry or slightly moist process for cleaning the parts of the cladding (2), or respectively of the rod (1), exposed to contamination, this process possibly being by rubbing.

6. Method according to any one of Claims 1 to 5, **characterised in that** the enclosure is divided into four compartments (I-IV), of which
- the fourth and last compartment (IV) is intended for loading of the pellets (6) and structural elements;
- the third (III) is intended for cleaning of the part exposed to contamination during loading;
- the second (II) is intended for loading of the spring (7) and fitting of the second cap (4), and possible girth welding thereof if the fitting is not with clamping; and
- the first (I) is intended for contamination checking and possible cleaning of the parts exposed to contamination in the preceding compartments, and for input of the cladding and output of the rod.

7. Method according to any one of Claims 1 to 6, **characterised in that**
- loading of the pellets (6), cleaning of the end of the cladding (2) exposed to contamination and fitting of the second cap (4) are performed in compartments under helium, as well as optionally the contamination measurement at the output;
- upon introduction of a cladding (2) empty of pellets into the containment enclosure (10), its open end (34) is transferred into the first compartment under helium encountered only after pumping out and replacement, between this compartment and the preceding one, of the gas contained in the cladding (2) with helium.

8. Method according to any one of Claims 1 to 6, **characterised in that**
- loading of the pellets (6) is performed in the last compartment under vacuum or in an enclosure under vacuum located therein; and
- upon introduction of a cladding (2) empty of pellets (6) into the containment enclosure (10), its open end (34) is transferred into this last compartment only after pumping out, between this compartment and the preceding one, of the gas contained in the cladding (2).

9. Device for manufacturing non-contaminated MOX fuel rods (1) from pellets (6), for implementation of the method according to any one of Claims 1 to 8, and comprising a containment enclosure (10) for carrying out the following operations:
- loading of the pellets (6) in columns (12) into a cladding (2) open at one end and closed by a first cap (3) at the other;
- cleaning and possible checking of the contamination of the part of said cladding (2) which has been brought into contact with contamination or dust from said pellets (6);
- loading of various structural components, in particular a retaining spring (7);
- fitting of a second cap (4);
- checking of the contamination and possible cleaning of the part of said cladding (2) which has been brought into contact with contamination,
the device being **characterised in that**:
- the containment enclosure (10) is divided into a number of distinct compartments;
- the compartments are preferentially in succession one after the other in a direction of movement between compartments of a cladding (2) to be loaded, the open end (34) in front;
- the compartments of the enclosure are isolated from one another by sealed partitions having, for passing the cladding (2) from one compartment to another, a sealed passage (24), itself consisting of a full-passage valve (26) and a sealing device (28) on the circumference of the cladding (2), at least certain of said passages (24) being aligned in the direction of movement of the above-mentioned cladding (2), the first compartment encountered possibly being simply provided with an aperture at its input;
- at least one axial driving mechanism is arranged in order to move along its longitudinal axis the end of the introduced cladding (2) or of the rod (1) provided with its second cap (4) in the selected compartment;
- devices for loading the pellets (6) in columns (12) and means of loading various structural components (5) other than the retaining spring (7) and the second cap (4) are installed in the last compartment;
- at least one device for cleaning and possible means of checking contamination of the part of the cladding (2) exposed to contamination during loading of the pellets (6) are installed in a preceding compartment;
- means of loading the retaining spring (7) and of fitting - with clamping or not - the second cap (4) in the open end (34) of the cladding (2) are installed in another preceding compartment;
- means necessary for carrying out possible additional welding and/or pressurisation operations can be installed in the same compartment or in yet another compartment;
- means of checking contamination and possibly of cleaning of the parts of the rod (1) exposed to contamination during the preceding operations are installed in the first or second compartment;
- means of ventilating the enclosure (10), its compartments and any enclosures installed therein, and gas supply means, are installed in order to maintain the enclosure (10) at a depression compared with the atmosphere of the room and are arranged to provide
- a selection of gas for each compartment, chosen from amongst the group formed by: air, nitrogen, helium, argon, vacuum; and
- stepping of the depressions of the compartments - for the purposes of organising the direction of any leaks and contributing towards the stepping of the contaminations - from the weakest in the first compartment to the strongest in the last compartment.

10. Device according to Claim 9, **characterised in that** it comprises a device (14) for presentation, centring and alignment of the pellets (6) with a view to their loading into the cladding (2), itself
- consisting of a fixed metal component (14) with a channel (42) passing through it - the dimensions of the input (44) of which are chosen for accepting an off-centring of the pellets (6) in relation to the axis of the cladding (2), and the bottom of which has a V-shaped profile in a continuous ramp and intersecting with a cylindrical output (48) with the diameter of the pellets (6) - and provided with a cylindrical chamber (49) with the diameter of the cladding (2) and centred on the cylindrical output (48) of the channel;
- having dimensions and tolerances adapted to the dimensions of said pellets (6) and cladding (2), and such that the diameter of the cylindrical output (48) of the channel is smaller than the internal diameter of the cladding (2), for the purposes of masking the end of the cladding (2) from the pellets (6);
- optionally having longitudinal and/or transverse clearances and nozzles for blowing a gas in a direction opposite to the direction of loading and/or sucking up the dust and chips.

11. Device according to one or other of Claims 9 and 10, **characterised in that** it comprises, for loading of the pellets (6) and structural components, a pushing mechanism (50) with sensitive drive, having
- on the one hand axial driving by a set of rollers (56) equipped with a force limiting device (54) with low inertia and driven by a motor (52), the force of which is limited according to the depth of introduction of the pushing device (53) and the order (N) of the column of pellets (6) in the process of being loaded into the same cladding (2); and
- on the other hand a hollow rod (53) of low mass and adapted length, so that the depth of introduction of the last pellet (6) of a column loaded into the cladding (2) is equal to at least the length of the next column to be loaded into the same cladding (2).

12. Device according to any one of Claims 9 to 11, **characterised in that** it has at least one device for dry or slightly moist cleaning of the parts of the cladding (2) or respectively of the rod (1) exposed to contamination.

13. Device according to any one of Claims 9 to 12, **characterised in that** at least one of the cleaning devices comprises a system with strips, of woven or non-woven material, rubbing when dry or after slight moistening on the parts of said cladding (2) or respectively of the rod (1) which have been exposed to contamination.

14. Device according to any one of Claims 9 to 13, **characterised in that** the containment enclosure (10) consists of four compartments, of which
- the fourth and last (IV) comprises the devices for loading the pellets (6) in columns (12) and the means for loading various structural components, other than the spring (7) and the second cap(4);
- the third (III) comprises means for cleaning the part of the cladding (2) exposed to contamination during loading;
- the second (II) comprises means for loading the retaining spring (7) and fitting - with clamping or not - the second cap (4);
- the first input/output compartment (I) comprises contamination checking means and possibly a cleaning device.

15. Device according to any one of Claims 9 to 14, **characterised in that** the sealed passages (24) between compartments comprise at least
- a valve (26) which can either be fully closed or leave a complete passage open without contact for a cladding (2) or respectively a rod (1);
- a sealing joint member (28) arranged to either leave a complete passage open without contact for a cladding (2) or form a seal around a cladding (2) which is either stopped at this place or in relative motion rotation-wise or translation-wise; and
- a device for pumping out the gas confined in the volume contained between the valve (26) and the sealing member (28), both closed, and for possible filling of this same volume with another gas.

16. Device according to any one of Claims 9 to 15, **characterised in that** at least one gas supply device is arranged for supplying said compartments - and any chambers installed therein - with various gases chosen from amongst the group air, N2, Ar, He and vacuum.

17. Device according to any one of Claims 9 to 16, **characterised in that** it comprises a system for distributing helium, in either open circuit or closed circuit in recycling mode or else a combination of the two, intended to supply the compartments for loading the pellets (6), for subsequent cleaning and for fitting of the second cap (4).

18. Device according to any one of Claims 9 to 16, **characterised in that** the last compartment intended for loading of the pellets (6) comprises means for loading the pellets (6) into the cladding (2) under vacuum.

19. Device according to any one of Claims 9 to 18, **characterised in that** the compartment comprising the fitting means also comprises a device for girth welding of the second cap (4) to the cladding (2), when said cap is mounted without clamping in the cladding (2).

## Patentansprüche

1. Verfahren zur Herstellung von nicht verunreinigten MOX-Brennstäben (1), anhand von Tabletten (6), in einem Schutzbehälter (10) unter Unterdruck, wobei das Verfahren für einen Stab (1) die folgenden Vorgänge umfasst:
- eine Beschickung der Tabletten (6) in sukzessiven Säulen (12) in eine Hülle (2), die vorher mit einem ersten Verschlussstück (3) an einem ihrer beiden Enden versehen wurde,
- eine Beschickung verschiedener Strukturkomponenten, insbesondere einer Haltefeder (7),
- eine Verbindung eines zweiten Verschlussstücks (4) am anderen Ende der Hülle (2),
- ein Umfangsschweißen des zweiten Verschlussstücks (4), insbesondere wenn es nicht in der Hülle (2) pressverbunden ist, und
- zumindest eine Reinigung und zumindest eine Kontrolle der Verunreinigung der Teile der Hülle (2) oder jeweils des Stabs (1), die einer Verunreinigung ausgesetzt waren,
wobei das Verfahren **dadurch gekennzeichnet ist, dass** es Folgendes umfasst:
- eine Teilung des Schutzbehälters (10) in mehrere sukzessive Abteile,
- eine Verbindung von jedem Abteil mit seinem Nachbarteil für einen dichten Durchgang der Hülle (2), wobei zumindest einige der Durchgänge ausgefluchtet sind, um eine Verschiebung der Hülle (2) nach einer Längsachse zu erlauben,
- eine Einführung der zu beschickenden Hülle (2), mit offenem Ende (34) nach vorne, in ein erstes Abteil durch einen dichten Durchgang oder eine Einlassöffnung zu diesem,
- eine Axialmitnahme der Hülle (2) zwischen sukzessiven Abteilen bis ihr offenes Ende (34) das letzte Abteil erreicht,
- eine Beschickung der Tabletten (6) in das letzte Abteil, und gegebenenfalls auch der anderen verschiedenen Strukturkomponenten (5) als die Haltefeder (7), in die Hülle (2) durch ihr offenes Ende (34),
- eine derartige partielle axiale Rücknahme der Hülle (2), wenn die Beschickung vollendet ist, dass ihr offenes Ende (34) in ein vorhergehendes Abteil gebracht wird,
- in diesem vorhergehenden Abteil, eine Reinigung und eine mögliche Kontrolle der Verunreinigung, zumindest des Teils der Hülle (2), das einer Verunreinigung ausgesetzt ist, durch die Tabletten (6), deren Beschickung gerade erfolgt, oder durch die Umgebung des letzten Abteils,
- nach dieser Reinigung, eine derartige axiale Verschiebung der Hülle (2), dass sich die Zone des offenen Endes (34) in einem anderen Abteil befindet,
- eine Beschickung der Haltefeder (7) und eine Verbindung des zweiten Verschlussstücks (4) in das offene Ende (34), in diesem anderen Abteil,
- nach dieser Verbindung, die Ausführung möglicher anderer Vorgänge im selben Abteil oder in noch einem anderen Abteil, anhand einer möglichen zusätzlichen Verschiebung,
- eine Kontrolle der Verunreinigung der Teile des Stabs (1), die der Verunreinigung der letzten Abteile ausgesetzt sind und eine mögliche Reinigung, sofern notwendig, im ersten oder im zweiten Abteil,
- eine Rücknahme des Stabs (1) aus dem ersten Abteil oder ein transversaler Transfer zu einem anderen Schutzbehälter über ein erstes Abteil, das die Behälter miteinander verbindet,
- eine Abstufung der Verunreinigungen zwischen den verschiedenen Abteilen, ausgehend von nicht oder sehr schwach verunreinigt im ersten Abteil bis am meisten verunreinigt im letzten Abteil,
- eine Auswahl von Gasen, die die Abteile versorgen, die aus der Gruppe mit Luft, Stickstoff, Helium, Argon und Vakuum ausgewählt werden,
- eine Abstufung der Unterdrücke in den Abteilen, um die möglichen Undichtigkeiten zu organisieren, vom niedrigsten Unterdruck im ersten Abteil bis zum stärksten Unterdruck im letzten Abteil.

2. Verfahren nach Anspruch 1, **dadurch gekennzeichnet, dass**, für die Beschickung der Tabletten (6) und die folgenden verbundenen Vorgänge:
- Präsentieren, Zentrieren und Ausfluchten der Tabletten (6) einer Säule (12) von einem Träger (38) bis zum offenen Ende (34) der Hülle (2),
Folgendes ausgeführt wird:
- ein Nachregeln der Dezentrierungen zwischen dem Träger (38) und dem offenen Ende (34) der Hülle (2), und eine Ausfluchtung der Achse der Tabletten (6) mit der Achse der Hülle (2), mit Hilfe eines Kanals (42) dessen Grund ein V-Profil aufweist, und dies als kontinuierliche Rampe und Schnittfläche mit einem zylindrischen Ausgang mit dem Durchmesser der Tabletten (6),
- eine Zentrierung der Hülle (2) in einer Kammer, die auf den zylindrischen Teil des Kanals zentriert ist,
- ein Maskieren des offenen Endes (34) der Hülle (2) der Tabletten (6), deren Beschickung gerade erfolgt,
- ein Auffangen und/oder ein Sammeln und/oder ein Fördern der Staube und Splitter, die von den beschickten Tabletten (6) zugeführt wurden, und/oder an diesen haften, und/oder die von den Vorgängen der Präsentation, Zentrierung und Ausfluchtung erzeugt wurden, über die freien Abschnitte zwischen Tabletten (6) und Wänden des Kanals und/oder der Nuten, durch gravitationelle Ablagerung und optional durch zusätzliches Blasen und/oder Absaugen.

3. Verfahren nach Anspruch 1 oder 2, **gekennzeichnet durch** die Beschickung der Tabletten (6) einer Säule in die Hülle (2), bis zu einer Tiefe der Einführung der letzten Tablette (6) in die Hülle (2), die zumindest der Länge der nächsten in dieselbe Hülle (2) zu beschickenden Säule gleichkommt.

4. Verfahren nach einem der Ansprüche 1 bis 3, **dadurch gekennzeichnet, dass** die Beschickung der Tabletten (6) in sukzessiven Säulen in die Hülle (2) ausgeführt wird, indem die maximalen Schubkräfte bei der Beschickung begrenzt werden, in Abhängigkeit von der Tiefe der Einführung des Schiebers und der Ordnung (N) der Säule, deren Beschickung gerade erfolgt, in dieselbe Hülle (2).

5. Verfahren nach einem der Ansprüche 1 bis 4, **gekennzeichnet durch** ein Trocken- oder Halbfeuchtverfahren für die Reinigung der Teile der Hülle (2), oder jeweils des Stabs (1), die einer Verunreinigung ausgesetzt sind, wobei das Verfahren ein Reibungsverfahren sein kann.

6. Verfahren nach einem der Ansprüche 1 bis 5, **dadurch gekennzeichnet, dass** der Behälter in vier Abteile (I-IV) geteilt wird, von denen
- das vierte und letzte Abteil (IV) für die Beschickung der Tabletten (6) und von Strukturelementen vorgesehen ist,
- das dritte (III) für die Reinigung des Teils, das bei der Beschickung einer Verunreinigung ausgesetzt ist, vorgesehen ist,
- das zweite (II) für die Beschickung der Feder (7) und die Verbindung des zweiten Verschlussstücks (4), und ein mögliches Umfangsschweißen von diesem, wenn die Verbindung keine Spannverbindung ist, vorgesehen ist, und
- das erste (I) für die Kontrolle der Verunreinigung und die mögliche Reinigung der Teile, die der Verunreinigung in den vorhergehenden Abteilen ausgesetzt sind, und den Eingang der Hülle und den Ausgang des Stabs, vorgesehen ist.

7. Verfahren nach einem der Ansprüche 1 bis 6, **dadurch gekennzeichnet, dass**
- die Beschickung der Tabletten (6), die Reinigung des Endes der Hülle (2), das der Verunreinigung ausgesetzt ist, und die Verbindung des zweiten Verschlussstückes (4) in Abteilen unter Helium ausgeführt werden, und fakultativ die Messung der Verunreinigung am Ausgang,
- bei der Einführung einer Hülle (2) ohne Tabletten in den Schutzbehälter (10), ihr offenes Ende (34) erst dann in das erste Abteil unter Helium transferiert wird, nachdem, zwischen diesem Abteil und dem vorhergehenden Abteil, das Gas, das sich in der Hülle (2) befindet, abgepumpt und durch das Helium ersetzt wurde.

8. Verfahren nach einem der Ansprüche 1 bis 6, **dadurch gekennzeichnet, dass**
- die Beschickung der Tabletten (6) im letzten Abteil unter Vakuum ausgeführt wird oder in einem Behälter unter Vakuum, der sich in diesem befindet und,
- bei der Einführung einer Hülle (2) ohne Tabletten (6) in den Schutzbehälter (10), ihr offenes Ende (34) erst dann in dieses letzte Abteil transferiert wird, nachdem, zwischen diesem Abteil und dem vorhergehenden Abteil, das Gas, das sich in der Hülle (2) befindet, abgepumpt wurde.

9. Vorrichtung zur Herstellung von nicht verunreinigten Mox-Brennstäben (1) anhand von Tabletten (6), für den Einsatz des Verfahrens nach einem der Ansprüche 1 bis 8, und mit einem Schutzbehälter (10) für die Ausführung der folgenden Vorgänge:
- Beschickung der Tabletten (6) in Säulen (12) in eine Hülle (2), die an einem Ende offen ist und die am anderen Ende durch ein erstes Verschlussstück (3) geschlossen ist,
- Reinigung und mögliche Kontrolle der Verunreinigung des Teils der Hülle (2), das mit einer Verunreinigung in Kontakt gebracht wurde oder der Staube der Tabletten (6),
- Beschickung der verschiedenen Strukturkomponenten, insbesondere einer Haltefeder (7),
- Verbindung eines zweiten Verschlussstückes (4),
- Kontrolle der Verunreinigung und mögliche Reinigung des Teils der Hülle (2), das mit einer Verunreinigung in Kontakt gebracht wurde,
wobei die Vorrichtung **dadurch gekennzeichnet ist, dass**:
- der Schutzbehälter (10) in mehrere verschiedene Abteile geteilt ist,
- die Abteile vorzugsweise sukzessiv eines hinter dem anderen sind, nach einer Verschiebungsrichtung zwischen den Abteilen einer zu beschickenden Hülle (2) mit offenem Ende (34) nach vorne,
- die Abteile der Behälter durch dichte Wände voneinander isoliert sind und, um die Hülle (2) von einem Abteil in das andere zu führen, über einen dichten Durchgang (24) verfügen, der sich aus einem Schieber (26) mit Integraldurchgang und einer Dichtungsvorrichtung (28) am Umfang der Hülle (2) zusammen setzt, wobei zumindest einige der Durchgänge (24) nach der Verschiebungsrichtung der Hülle (2) ausgefluchtet sind, wobei das erste angetroffene Abteil einfach am Eingang mit einer Öffnung versehen sein kann,
- zumindest ein Axialmitnahmemechanismus angeordnet ist, um das eingeführte Ende der Hülle (2) oder des Stabs (1) mit seinem zweiten Verschlussstück (4) im ausgewählten Abteil nach seiner Längsachse zu verschieben,
- Vorrichtungen zur Beschickung der Tabletten (6) in Säulen (12) und Mittel zur Beschickung der diversen Strukturkomponenten (5), die nicht die Haltefeder (7) und das zweite Verschlussstück (4) sind, im letzten Abteil installiert sind,
- zumindest eine Vorrichtung zur Reinigung und mögliche Mittel zur Kontrolle der Verunreinigung des Teils der Hülle (2), das der Verunreinigung bei der Beschickung der Tabletten (6) ausgesetzt ist, in einem vorhergehenden Abteil installiert sind,
- Mittel zur Beschickung der Haltefeder (7) und der Pressverbindung oder Nicht-Pressverbindung des zweiten Verschlussstückes (4) im offenen Ende (34) der Hülle (2) in einem anderen vorhergehenden Abteil installiert sind,
- Mittel, die zur Ausführung möglicher zusätzlicher Vorgänge des Schweißens und/oder der Druckerzeugung notwendig sind, im selben Abteil oder in noch einem anderen Abteil installiert sein können,
- Mittel zur Kontrolle der Verunreinigung und gegebenenfalls der Reinigung der Teile des Stab (1), die der Verunreinigung bei den vorhergehenden Vorgängen ausgesetzt sind, im ersten oder im zweiten Abteil installiert sind,
- Mittel zur Belüftung des Behälters (10), seiner Abteile und der möglichen dort installierten Behälter, und Mittel zur Gasversorgung installiert sind, um den Behälter (10) unter Unterdruck im Verhältnis zur lokalen Umgebung zu halten, angeordnet sind, um für Folgendes zu sorgen:
- eine Auswahl von Gas für jedes Abteil, das aus der Gruppe mit Luft, Stickstoff, Helium, Argon und Vakuum ausgewählt wird, und
- eine Abstufung der Unterdrücke der Abteile - um die Richtung der möglichen Undichtigkeiten zu organisieren und zur Abstufung der Verunreinigungen beizutragen - vom niedrigsten im ersten Abteil bis zum stärksten im letzten Abteil.

10. Vorrichtung nach Anspruch 9, **dadurch gekennzeichnet, dass** sie eine Vorrichtung (14) zur Präsentation, Zentrierung und Ausfluchtung der Tabletten (6) für deren Beschickung in die Hülle (2) aufweist, die ihrerseits
- aus einem festen Metallteil (14) gebildet ist, das von einem Kanal (42) durchquert wird - dessen Eingangsdimensionen (44) ausgewählt sind, um eine Dezentrierung der Tabletten (6) gegenüber der Achse der Hülle (2) zu akzeptieren und dessen Grund ein V-Profil als kontinuierliche Rampe und Schnittfläche mit einem zylindrischen Ausgang (48) mit dem Durchmesser der Tabletten (6) aufweist - und über eine Zylinderkammer (49) mit dem Durchmesser der Hülle (2) verfügt und die auf den zylindrischen Ausgang (48) des Kanals zentriert ist,
- Dimensionen und Toleranzen aufweist, die den Dimensionen der Tabletten (6) und Hülle(2) angepasst sind, und dies derart, dass der Durchmesser des zylindrischen Ausgangs (48) des Kanals kleiner als der Innendurchmesser der Hülle (2) ist, um das Ende der Hülle (2) den Tabletten (6) zu maskieren,
- fakultativ Längs- und/oder Querabstände und Ansätze aufweist, um ein Gas in einer entgegengesetzten Richtung zur Beschickungsrichtung zu blasen und/oder die Staube und Splitter abzusaugen.

11. Vorrichtung nach einem der Ansprüche 9 oder 10, **dadurch gekennzeichnet, dass** sie, für die Beschickung der Tabletten (6) und der Strukturkomponenten, einen Schubmechanismus (50) mit Sensorantrieb umfasst, der Folgendes aufweist:
- einerseits eine Axialmitnahme durch einen Satz Rollen (56), die mit einem Leistungsbegrenzer (54) mit geringer Inertie ausgerüstet sind und die durch einen Motor (52) angetrieben werden, dessen Leistung in Abhängigkeit von der Tiefe der Einführung des Schiebers (53) und der Ordnung (N) der Säule der Tabletten (6), deren Beschickung in dieselbe Hülle (2) gerade erfolgt, begrenzt wird, und
- andererseits eine Hohlstange (53) mit geringer Masse und angepasster Länge, damit die Tiefe der Einführung der letzten Tablette (6) einer Säule, die in die Hülle (2) beschickt wird, zumindest der Länge der nächsten in dieselbe Hülle (2) zu beschickenden Säule gleichkommt.

12. Vorrichtung nach einem der Ansprüche 9 bis 11, **dadurch gekennzeichnet, dass** sie zumindest eine Vorrichtung zur Trockenreinigung oder Halbfeuchtreinigung der Teile der Hülle (2) oder jeweils des Stabs (1), die einer Verunreinigung ausgesetzt sind, aufweist.

13. Vorrichtung nach einem der Ansprüche 9 bis 12, **dadurch gekennzeichnet, dass** zumindest eine der Vorrichtungen zur Reinigung ein Bandsystem aus gewebtem oder nicht gewebtem Material aufweist, das trocken oder nach leichter Befeuchtung an den Teilen der Hülle (2) oder jeweils des Stabs (1), die einer Verunreinigung ausgesetzt waren, reibt.

14. Vorrichtung nach einem der Ansprüche 9 bis 13, **dadurch gekennzeichnet, dass** der Schutzbehälter (10) aus vier Abteilen gebildet ist, von denen
- das vierte und letzte (IV) die Vorrichtungen zur Beschickung der Tabletten (6) in Säulen (12) und die Mittel zur Beschickung der diversen Strukturkomponenten, die nicht die Feder (7) und das zweite Verschlussstück (4) sind, aufweist,
- das dritte (III) Mittel zur Reinigung des Teils der Hülle (2), das der Verunreinigung bei der Beschickung ausgesetzt ist, aufweist.
- die zweite (II) Mittel zur Beschickung der Haltefeder (7) und zur Verbindung - der Press- oder Nicht-Pressverbindung - des zweiten Verschlussstückes (4) aufweist,
- das erste Ein-/Ausgangsabteil (I) Mittel zur Kontrolle der Verunreinigung und gegebenenfalls eine Vorrichtung zur Reinigung aufweist.

15. Vorrichtung nach einem der Ansprüche 9 bis 14, **dadurch gekennzeichnet, dass** die dichten Durchgänge (24) zwischen den Abteilen zumindest Folgendes umfassen:
- einen Schieber (26), der entweder vollkommen geschlossen sein kann oder einen integralen Durchgang ohne Kontakt für eine Hülle (2) oder jeweils einen Stab (1) freigeben kann,
- ein Dichtungsorgan (28), das angeordnet ist, um entweder einen integralen Durchgang ohne Kontakt für eine Hülle (2) freizugeben, oder eine Dichtheit um eine Hülle (2) zu bilden, oder an dieser Stelle entweder eine relative Dreh- oder Translationsbewegung anzuhalten, und
- eine Vorrichtung zum Abpumpen des Gases, das im Raum zwischen dem Schieber (26) und dem Dichtungsorgan (28), die alle beide geschlossen sind, eingeschlossen ist, und zum möglichen Füllen dieses Raums mit einem anderen Gas.

16. Vorrichtung nach einem der Ansprüche 9 bis 15, **dadurch gekennzeichnet, dass** zumindest eine Vorrichtung zur Gasversorgung angeordnet ist, um die Abteile - und die möglichen dort installierten Kammern - mit diversen Gasen, die aus der Gruppe Luft, N₂, Ar, He und Vakuum ausgewählt werden, zu versorgen.

17. Vorrichtung nach einem der Ansprüche 9 bis 16, **dadurch gekennzeichnet, dass** sie ein System zur Verteilung von Helium aufweist, entweder im offenen oder im geschlossenen Rückführungskreis oder auch eine Kombinierung der beiden, das dazu vorgesehen ist, die Abteile der Beschickung der Tabletten (6), der nachfolgenden Reinigung und der Verbindung des zweiten Verschlussstückes (4) zu versorgen.

18. Vorrichtung nach einem der Ansprüche 9 bis 16, **dadurch gekennzeichnet, dass** das letzte Abteil, das für die Beschickung der Tabletten (6) vorgesehen ist, Mittel zur Beschickung der Tabletten (6) in die Hülle (2) unter Vakuum aufweist.

19. Vorrichtung nach einem der Ansprüche 9 bis 18, **dadurch gekennzeichnet, dass** das Abteil mit den Mitteln zur Verbindung ebenfalls eine Vorrichtung zum Umfangsschweißen des zweiten Verschlussstückes (4) an die Hülle (2) aufweist, wenn das Verschlussstück ohne Pressen in der Hülle (2) montiert ist.
